# EUROPEAN PATENT APPLICATION

(11) **EP 2 950 503 A1**
(43) Date of publication of application: **02.12.2015**
(21) Application number: 15168494.1
(22) Date of filing: 20.05.2015
(51) Int. Cl.: H04L 29/06

(54) **COMMUNICATION SYSTEM, TRANSFER CONTROL DEVICE, COMMUNICATION METHOD, AND COMPUTER PROGRAM PRODUCT**

(30) Priority: 26.05.2014 JP 2014108416
(71) Applicant: Ricoh Company, Ltd., Tokyo 143-8555 (JP)
(72) Inventor: HAMADA, Yuuta, Tokyo, 143-8555 (JP); ASAI, Takahiro, Tokyo, 143-8555 (JP)
(74) Representative: Schwabe - Sandmair - Marx

(57) **Abstract**

A communication system includes a transfer control device including a terminal management unit that stores a type of content data usable by a second terminal device, a reception unit that receives at least one type of content data generated by a first terminal device, a data selection unit that selects, for the second terminal device, the usable type of content data from among the at least one type of content data received from the first terminal devices, by reference to the terminal management unit, a transmission unit that transmits the type of content data selected by the data selection unit to the second terminal device, and an update unit that updates corresponding information stored in the terminal management unit, according to change notification of a usable type of content data, the change notification being transmitted from the second terminal device.

## Description

### CROSS-REFERENCE TO RELATED APPLICATION(S)

The present application claims priority to and incorporates by reference the entire contents of Japanese Patent Application No. 2014-108416 filed in Japan on May 26, 2014.

### BACKGROUND OF THE INVENTION

### 1. Field of the Invention

The present invention relates to a communication system, a transfer control device, a communication method, and a computer program product.

### 2. Description of the Related Art

Communication systems that enable users in physically different places to perform communication with one another through a network, such as the Internet, have become common. As an example of the communication systems, there is a conference system that allows the users in remote locations to have a conference (see Japanese Patent Application Laid-open No. 2012-075073). In a typical conference system, a terminal device used by one user converts an image and a sound in a conference room into digital data, and transmits the digital data to a call terminal used by the other user through a server (computer). Next, a terminal device used by the other user displays the image of the one user side on a display, and outputs the sound of the one user side through a speaker. Accordingly, the conference system enables the users in remote locations to have a conference.

Further, electronic whiteboards are used in companies, educational institutions, administrative agencies, and the like. A typical electronic whiteboard displays a background image, a UI image (operation image), and the like on a display, and the user can draw a stroke image (characters, numerals, figures, and the like) on the background image and the operation image. For example, the stroke image is generated such that a trajectory drawn by the user with an electronic pen, a hand, or the like coming in contact with the display is converted into coordinate data.

Further, typically, the electronic whiteboard can transmit/receive the coordinate data to/from another electronic whiteboard through the server (computer). Therefore, the electronic whiteboard can be used as a terminal device of a conference system. In a conference system that uses the electronic whiteboard as a terminal device, one electronic whiteboard transmits the coordinate data to another electronic whiteboard through the server (computer). Next, the another electronic whiteboard reproduces the stroke image from the received coordinate data, and draws the image on the display. Accordingly, the conference system can exchange the stroke image between remote locations, in addition to the image and the sound, and can make the conference more convenient.

Japanese Patent Application Laid-open No. 2013-131204 also discloses a relevant technique.

By the way, when users in many places have a conference, there is a case in which the electronic whiteboard is installed in a conference room in a certain place, but the electronic whiteboard is not installed in a conference room in the other place. In such a case, even if the electronic whiteboard in one place transmits the coordinate data to the terminal device in the other place, the terminal device in the other place cannot reproduce the stroke image.

Therefore, in such a communication system, the server (computer) or the like transmits data that cannot be reproduced in the other place, and thus the transmission processing becomes a waste.

Further, as another example, there is a terminal device to/from which a device such as a microphone, a display is freely connectable/removable. When such a terminal device is used in the conference system, there is a possibility that the device such as a microphone or a display is connected to or removed from the terminal device in a certain place. In that case, a function of the microphone, the display, or the like becomes useless if image data or sound data is not transmitted despite of connection of the microphone, the display, or the like. Further, the transmission processing becomes a waste if the image data or the sound data is continuously transmitted despite of removal of the microphone, the display, or the like.

### SUMMARY OF THE INVENTION

It is an object of the present invention to at least partially solve the problems in the conventional technology,

A communication system includes: a first terminal device that generates at least one type of content data; a second terminal device that can use at least one type of content data; and a transfer control device. The transfer control device includes a terminal management unit that stores a type of content data usable by the second terminal device, a reception unit that receives the at least one type of content data generated by the first terminal device, a data selection unit that selects, for the second terminal device, the usable type of content data from among the at least one type of content data received from the first terminal device, by reference to the terminal management unit, a transmission unit that transmits the type of content data selected by the data selection unit to the second terminal device, and an update unit that updates corresponding information stored in the terminal management unit, according to change notification of a usable type of content data, the change notification being transmitted from the second terminal device.

A transfer control device transfers content data received from a first terminal device to a second terminal device. The transfer control device includes: a terminal management unit that stores a type of content data usable by the second terminal device, a reception unit that receives at least one type of content data generated by the first terminal device, a data selection unit that selects, for the second terminal device, the usable type of content data from among the at least one type of content data received from the first terminal device, by reference to the terminal management unit, a transmission unit that transmits the type of content data selected by the data selection unit to the second terminal device, and an update unit that updates corresponding information stored in the terminal management unit, according to change notification of a usable type of content data, the change notification being transmitted from the second terminal device.

A communication method transfers content data received from a first terminal device to a second terminal device. The method includes: storing a type of content data usable by the second terminal device, in a terminal management unit; receiving at least one type of content data generated by the first terminal device; selecting, for the second terminal device, the usable type of content data from among the at least one type of content data received from the first terminal device, by reference to the terminal management unit; transmitting the type of content data selected at the selecting, to the second terminal device; and updating corresponding information stored in the terminal management unit, according to change notification of a usable type of content data, the change notification being transmitted from the second terminal device.

A computer program product includes a non-transitory computer-readable medium containing an information processing program. The program causes a computer to function as a transfer control device that transfers content data received from a first terminal device to a second terminal device. The transfer control device includes: a terminal management unit that stores a type of content data usable by the second terminal device, a reception unit that receives at least one type of content data generated by the first terminal device, a data selection unit that selects, for the second terminal device, the usable type of content data from among the at least one type of content data received from the first terminal device, by reference to the terminal management unit, a transmission unit that transmits the type of content data selected by the data selection unit to the second terminal device, and an update unit that updates corresponding information stored in the terminal management unit, according to change notification of a usable type of content data, the change notification being transmitted from the second terminal device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating a communication system 1 according to an embodiment;
FIG. 2 is a diagram illustrating an outline of processing of transferring content data in the communication system l'according to an embodiment;
FIG. 3 is a diagram illustrating an example of an appearance of a call terminal 10;
FIG. 4 is a diagram illustrating a hardware configuration of the call terminal 10;
FIG. 5 is a diagram illustrating an example of an appearance of an electronic whiteboard 20;
FIG. 6 is a diagram illustrating a hardware configuration of the electronic whiteboard 20;
FIG. 7 is a diagram illustrating an example of an appearance of a smart phone 30;
FIG. 8 is a diagram illustrating a hardware configuration of the smart phone 30;
FIG. 9 is a diagram illustrating a hardware configuration of a transfer control device 50 and a program providing device 60;
FIG. 10 is a diagram illustrating a functional configuration of the call terminal 10 and the smart phone 30;
FIG. 11 is a diagram illustrating a functional configuration of the electronic whiteboard 20;
FIG. 12 is a diagram illustrating an example of image layers;
FIG. 13 is a diagram illustrating an example of page data;
FIG. 14 is a diagram illustrating an example of stroke arrangement data;
FTG. 15 is a diagram illustrating an example of coordinate arrangement data;
FIG. 16 is a diagram illustrating an example of media data;
FIG. 17 is a diagram illustrating a functional configuration of the transfer control device 50;
FIG. 18 is a diagram illustrating an example of an authentication management table;
FIG. 19 is a diagram illustrating an example of a transfer destination management table;
FIG. 20 is a diagram illustrating an example of a terminal management table;
FIG. 21 is a diagram illustrating an example of an operation state table;
FIG. 22 is a diagram illustrating processing of selecting content data in the communication system 1 according to an embodiment;
FIG. 23 is a diagram illustrating change notification processing in the communication system 1 according to an embodiment;
FIG. 24 is a diagram illustrating processing of selecting content data after the change notification processing in the communication system 1 according to an embodiment;
FIG. 25 is a diagram illustrating a sequence of processing of logging in the transfer control device 50 by the call terminal 10;
FIG. 26 is a diagram illustrating an example of a screen for selecting a transfer destination of content data;
FIG. 27 is a diagram illustrating a sequence of when content data is transferred from a first electronic whiteboard 20a to a second electronic whiteboard 20b and a first call terminal 10a;
FIG. 28 is a diagram illustrating a flow of processing of determining a transfer destination and data to be transferred;
FIG. 29 is a diagram illustrating a sequence of when a display 120 has been connected to and removed from a second call terminal 10b when the content data is transferred from the first call terminal 10a to the second call terminal 10b;
FIG. 30 is a diagram illustrating a sequence of when a microphone speaker 220 has been connected to or removed from the first electronic whiteboard 20a when the content data is transferred from the first call terminal l0a to the first electronic whiteboard 20a;
FIG. 31 is a diagram illustrating a sequence of when a use form of a first smart phone 30a has been switched when the content data is transferred from the first call terminal 10a to the first smart phone 30a;
FIG. 32 is a diagram illustrating a modification of the terminal management table;
FIG. 33 illustrates an example of an image with a low resolution at (a), an example of an image with an intermediate resolution at (b), and an example of an image with a high resolution at (c); and
FIG. 34 is a diagram illustrating a sequence of when a resolution of the display 120 to be connected to the second call terminal 10b has been changed when the content data is transferred from the first call terminal 10a to the second call terminal 10b.

### DETAILED DESCRIPTION OF THE PREFERRED EMBODIMENTS

Hereinafter, a communication system 1 according to an embodiment will be described with reference to the drawings.

### Overall Configuration of Embodiments

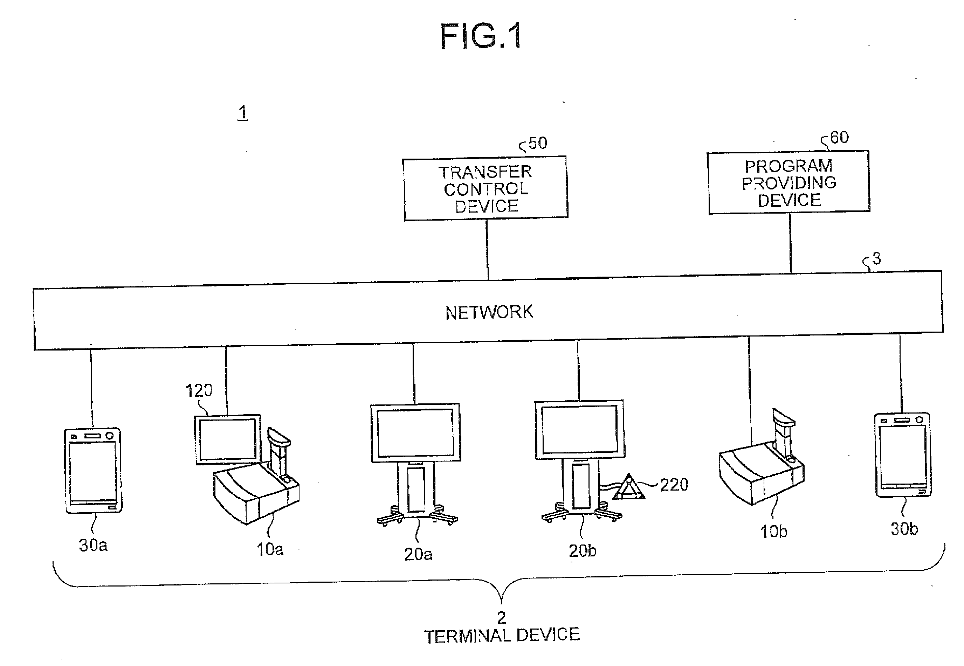

FIG. 1 is a diagram illustrating the communication system 1 according to an embodiment. The communication system 1 includes a plurality of terminal devices 2, a transfer control device 50, and a program providing device 60. The plurality of terminal devices 2, the transfer control device 50, and the program providing device 60 are mutually connected through a network 3 to realize transmission/receipt of data. The network 3 may be a local area network (LAN), a wide area network (WAN), or a WAN including a public line, or may be any network.

The communication system 1 is a communication system that allows the plurality of terminal devices 2 to mutually transmit information. In the present embodiment, an example in which the communication system 1 is applied to a television (video) conference system or the like will be described. However, the communication system 1 can be applied not only to the television conference system, and but also, for example, to a sound conference system, a sound telephone system (including a mobile phone system), a text chat system, a whiteboard sharing system, and the like.

The terminal device 2 is handled by a user. The terminal device 2 inputs various types of content data, and outputs content data. The content data may be, for example, image data, sound data, coordinate data, text data, or the like. Note that the text data may be data that indicates a message used in chat or the like. The terminal device 2 can convert the information input by the user or information acquired from its environment into the content data, and transmit the content data to another terminal device 2. Further, the terminal device 2 can reproduce the content data received from another terminal device 2, and output the content data to the user.

The plurality of terminal devices 2 includes devices that are different in a usable type of content data. In the present embodiment, the plurality of terminal devices 2 includes one or more call terminals 10 (for example, a first call terminal 10a and a second call terminal 10b), one or more electronic whiteboards 20 (for example, a first electronic whiteboard 20a and a second electronic whiteboard 20b), and one or more smart phones 30 (for example, a first smart phone 30a and a second smart phone 30b).

The call terminal 10 acquires an image of an object in the environment, a sound in the environment, and a text input by the user, and converts the image, the sound, and the text into image data, sound data, and text data. Further, the call terminal 10 reproduces and outputs sound data and text data acquired from another device.

Further, the call terminal 10 can be connected with a display 120. The call terminal 10 connected with the display 120 reproduces and displays image data received from another device.

The electronic whiteboard 20 converts information drawn by the user with an electronic pen or a hand into coordinate data. Further, the electronic whiteboard 20 reproduces and displays the image data and the coordinate data received from another device.

Further, the electronic whiteboard 20 can be connected with a microphone speaker 220. The electronic whiteboard 20 connected with the microphone speaker 220 acquires a sound in the environment, converts the sound into sound data, and reproduces and outputs the sound data acquired from another device.

The smart phone 30 is an example of a mobile terminal device with a telephone function. The smart phone 30 acquires an image of an object in the environment, a sound in the environment, and a text input by the user, and converts the image, the sound, and the text into the image data, the sound data, and the text data. Further, the smart phone 30 reproduces and outputs image data, sound data, and text data acquired from another device.

When the smart phone 30 is used as a telephone device, the smart phone 30 is brought close to a face (to be specific, an ear) and used. Therefore, display of an image is often stopped. Further, when the smart phone 30 is used as an information terminal device, the smart phone 30 is brought away from the face and used. Therefore, an image is displayed.

Note that the terminal device 2 is not limited to the call terminal 10, the electronic whiteboard 20, and the smart phone 30, and may be another device as long as the device can input/output information.

The transfer control device 50 is an information processing device such as a server or a computer. The transfer control device 50 transfers the content data received from one terminal device 2 to another terminal device 2.

The program providing device 60 is an information processing device such as server or a computer. The program providing device 60 can store a program for causing the terminal device 2 to realize various functions or means, and transmit the program to the terminal device 2. Further, the program providing device 60 can store a program for causing the transfer control device 50 to realize various functions or means, and transmit the program to the terminal device 2.

The transfer control device 50 and the program providing device 60 may be realized by a single server, computer, or the like, or may be realized by the plurality of servers or computers being operated in cooperation with each other. Further, both of the transfer control device 50 and the program providing device 60 may be realized by a single server or computer.

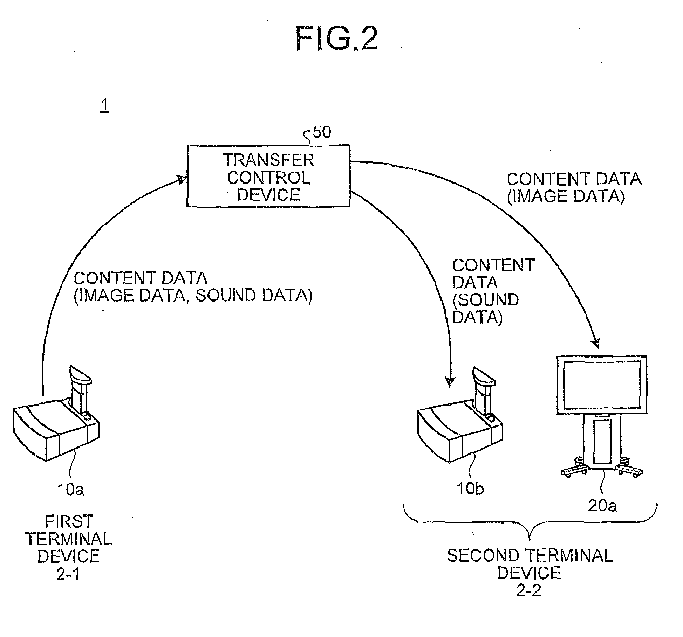

FIG. 2 is a diagram illustrating an outline of processing of transferring the content data in the communication system 1 according to an embodiment. In the communication system 1 according to an embodiment, the transfer control device 50 controls the transfer of the content data among the terminal devices 2.

To be specific, a first terminal device 2-1 (for example, the first call terminal 10a) acquires a captured image of a user, voice of the user, and/or the like, generates image data and sound data (content data), and transmits the image data and sound data (content data) to the transfer control device 50 through the network 3. The transfer control device 50 receives the image data and sound data (content data) from the first terminal device 2-1, and transmits the received image data and sound data (content data) to at least one second terminal device 2-2 (for example, the second call terminal 10b and the first electronic whiteboard 20a) selected in advance through the network 3. In this case, the transfer control device 50 transmits, to the second call terminal 10b, the sound data usable in the second call terminal 10b, and does not transmit the unusable image data. Further, the transfer control device 50 transmits, to the first electronic whiteboard 20a, the image data usable in the first electronic whiteboard 20a, and does not transmit the unusable sound data.

Then, each of the at least one second terminal device 2-2 (for example, the second call terminal 10b and the first electronic whiteboard 20a) receives the content data from the transfer control device 50, reproduces the received content data, and outputs the reproduced content data to the user.

### Appearance and Hardware Configuration of Call Terminal 10

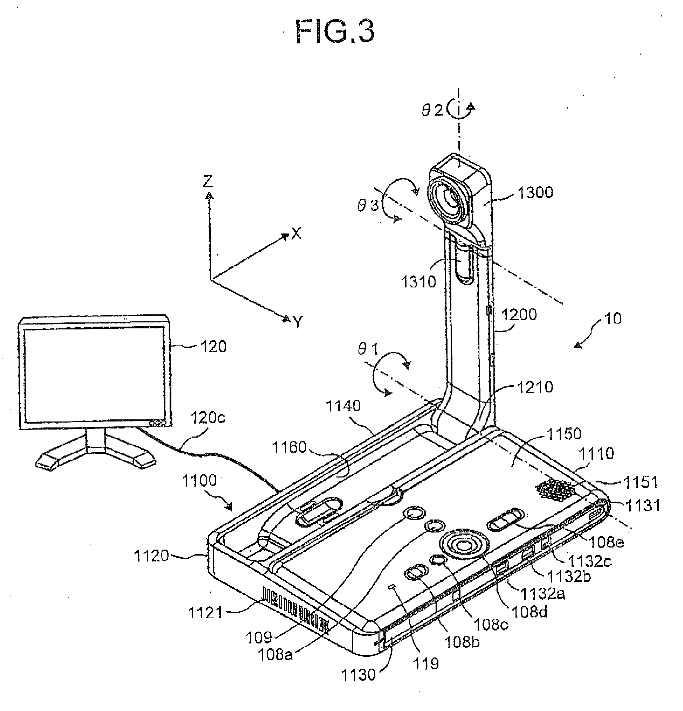

FIG. 3 is a diagram illustrating an example of an appearance of the call terminal 10. Note that, in FIG. 3, a direction determined in advance in a horizontal plane is an X axis direction. Further, in FIG. 3, a direction perpendicular to the X axis direction in the horizontal plane is a Y axis direction, and a direction (vertical direction) perpendicular to the X axis direction and the Y axis direction is a Z axis direction.

As illustrated in FIG. 3, the call terminal 10 includes a housing 1100, an arm 1200, and a camera housing 1300. A plurality of air intake holes (not illustrated) is formed in a rear-side wall surface 1110 of the housing 1100. A plurality of air exhaust holes 1121 is formed in a frontside wall surface 1120 of the housing 1100. Accordingly, the call terminal 10 can take in an outside air in the rear of the call terminal by driving of a cooling fan built in the housing 1100, and discharge the air forward through the air exhaust holes 1121. A sound collecting hole 1131 is formed in a right-side wall surface 1130 of the housing 1100. Accordingly, the call terminal 10 can collect sounds such as voice uttered by the user, a sound in the environment, a noise, and the like with a built-in type microphone 114 described below.

An operation panel 1150 is formed at the upper right part of the housing 1100. A plurality of operation buttons 108a to 108e, a power source switch 109, and an alarm lamp 119 are included in the operation panel 1150. Note that the operation buttons 108a to 108e may be collectively described as an operation button 108. Further, a plurality of sound output holes 1151 for allowing an output sound from a built-in type speaker 115 described later to pass through is formed in the operation panel 1150.

Further, an accommodation recessed part 1160 for accommodating the arm 1200 and the camera housing 1300 is formed at the upper left part of the housing 1100. A plurality of connections 1132a to 1132c for electrically connecting a cable to an external device connection I/F (interface) 118 described later is provided in the right-side wall surface 1130 of the housing 1100. A connection (not illustrated) for electrically connecting a cable 120c for the display 120 to a display I/F 117 described later is provided in a left-side wall surface 1140 of the housing 1100.

The arm 1200 is attached to the housing 1100 through a torque hinge 1210. The arm 1200 is rotatable in an up and down direction with respect to the housing 1100 within a range of a tilt angle θ1 of 135 degrees, for example. Note that FIG. 3 illustrates the arm 1200 in a state where the tilt angle θ1 is 90 degrees.

A built-in type camera 112 described below is provided in the camera housing 1300. Accordingly, the call terminal 10 can capture the image of the user, a document, a room, and the like. Further, the camera housing 1300 is attached to the arm 1200 through a torque hinge 1310. The camera housing 1300 is rotatable in an up and down direction and a right and left direction with respect to the arm 1200 within a range of a pan angle θ2 of ±180 degrees and a tilt angle θ3 of ±45 degrees where the state illustrated in FIG. 3 is 0 degrees.

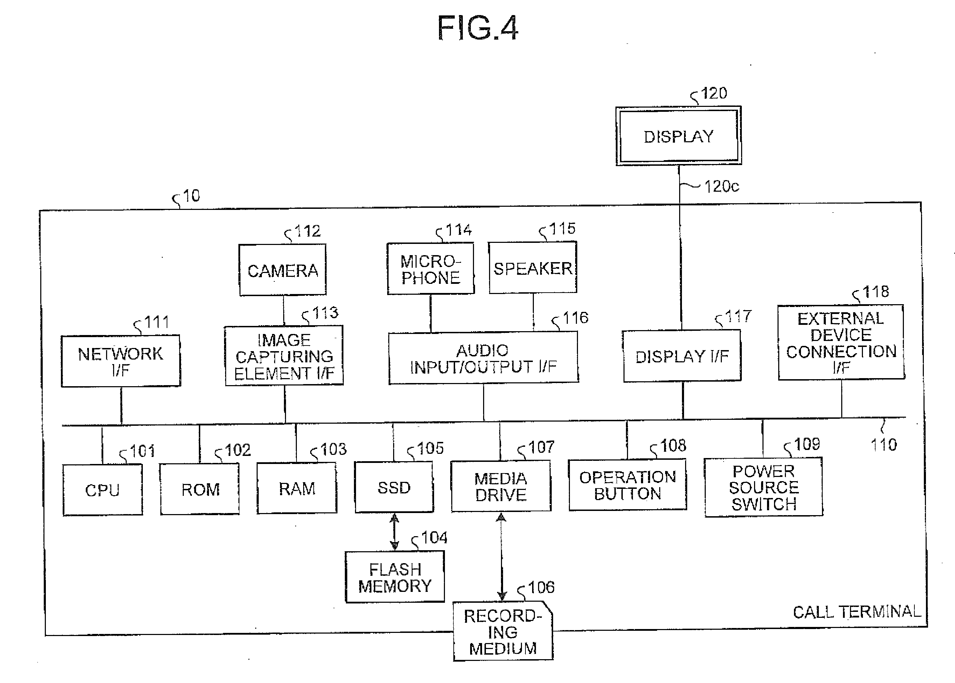

FIG. 4 is a diagram illustrating a hardware configuration of the call terminal 10. The call terminal 10 includes a central processing unit (CPU) 101, a read only memory (ROM) 102, a random access memory (RAM) 103, a flash memory 104, a solid state drive (SSD) 105, a media drive 107, an operation button 108, a power source switch 109, a network I/F 111, a camera 112, an image capturing element I/F 113, a microphone 114, a speaker 115, an audio input/output I/F 116, a display I/F 117, an external device connection I/F 118, and a bus line 110.

The CPU 101 controls an overall operation of the call terminal 10. The ROM 102 stores a program such as an initial program loader (IPL) used for driving of the CPU 101. The RAM 103 is used as a work area of the CPU 101. The flash memory 104 stores a transfer control program for the call terminal 10, and various types of data such as the image data and the sound data. The call terminal 10 may include an electrically erasable and programmable ROM (EEPROM) in place of the flash memory 104. The SSD 105 controls reading/writing of the various types of data from/to the flash memory 104 according to the control of the CPU 101. The media drive 107 controls reading/writing (storage) of data to/from the recording medium 106 such as the flash memory attachable/detachable to/from the call terminal 10.

The operation button 108 is a button for inputting operation information of the user at the time when a transfer destination of data is selected, or the like. The power source switch 109 is a button for switching ON/OFF of a power source of the call terminal 10. The network I/F 111 controls communication through the network 3.

The camera 112 captures the image of the object according to the control of the CPU 101 and obtains the image data. The camera 112 includes a lens and a solid-state image capturing element that converts light into electric charges to digitize the image (picture) of the object. As the solid-state image capturing element, a complementary metal oxide semiconductor (CMOS), a charge coupled device (CCD), or the like is used.

The image capturing element I/F 113 controls driving of the camera 112. The microphone 114 is a built-in type, and inputs a sound. The speaker 115 is a built-in type, and outputs the sound. The audio input/output I/F 116 performs processing of input/output of a sound signal from/to the microphone 114 and the speaker 115 according to the control of the CPU 101.

The display I/F 117 transmits the image data to the external display 120 according to the control of the CPU 101. The display 120 displays the image of the object, operation icons, and the like. The display 120 is connected to the display I/F 117 by the cable 120c. The cable 120c may be a cable for analog RGB (VGA) signals, a cable for component video, or a cable for high-definition multimedia interface (HDMI) (registered trademark) signals or digital video interactive (DVI) signals.

The external device connection I/F 118 is an interface circuit connected to the connections 1132a to 1132c, for controlling external devices according to the control of the CPU 101. The external devices such as an external camera, an external microphone, and an external speaker can be connected to the external device connection I/F 118 through a universal serial bus (USB) or the like. The bus line 110 is an address bus, a data bus, or the like for connecting the configuration elements.

When the external camera has been connected, the CPU 101 drives the external camera preferentially than the built-in type camera 112. Further, when the external microphone has been connected and when the external speaker has been connected, the CPU 101 drives the external microphone and the external speaker preferentially than the built-in type microphone 114 and the built-in type speaker 115.

Note that the camera 112, the microphone 114, and the speaker 115 are not necessarily built in, and only the external camera, the external microphone, and the external speaker may be able to be connected. Further, the display 120 may be built in the call terminal 10. Further, a projection device such as a projector may be connected to the call terminal 10 in place of the display 120.

Appearance and Hardware Configuration of Electronic Whiteboard 20

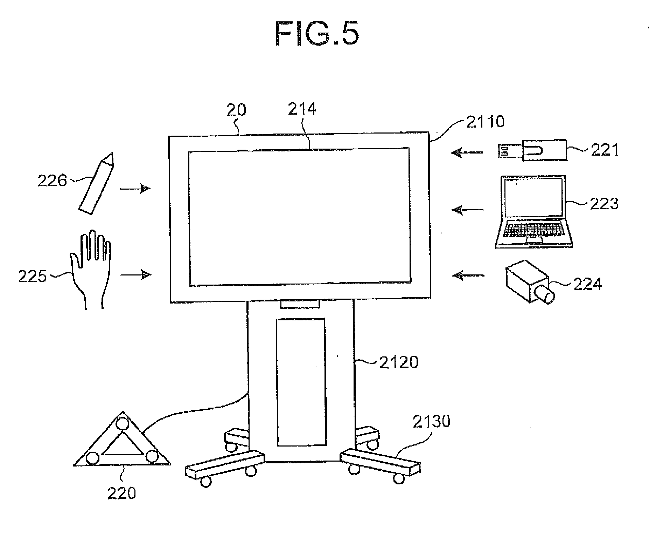

FIG. 5 is a diagram illustrating an example of an appearance of the electronic whiteboard 20. As illustrated in FIG. 5, the electronic whiteboard 20 includes a main body unit 2110, a support 2120, and a leg portion 2130.

The main body unit 2110 includes a display 214, and has a main function of the electronic whiteboard 20. The support 2120 supports the main body unit 2110 such that a display surface of the display 214 is vertically arranged. The leg portion 2130 supports the support 2120 against a floor so as to prevent the electronic whiteboard 20 from falling down. Further, the leg portion 2130 includes casters, and allows the electronic whiteboard 20 to move on the floor.

The microphone speaker 220, a recording medium 221, a notebook computer 223, and a camera 224 can be connected to the electronic whiteboard 20. Further, the electronic whiteboard 20 allows a drawing or an operation made by a hand 225 of the user or an electronic pen 226 to be input thereto.

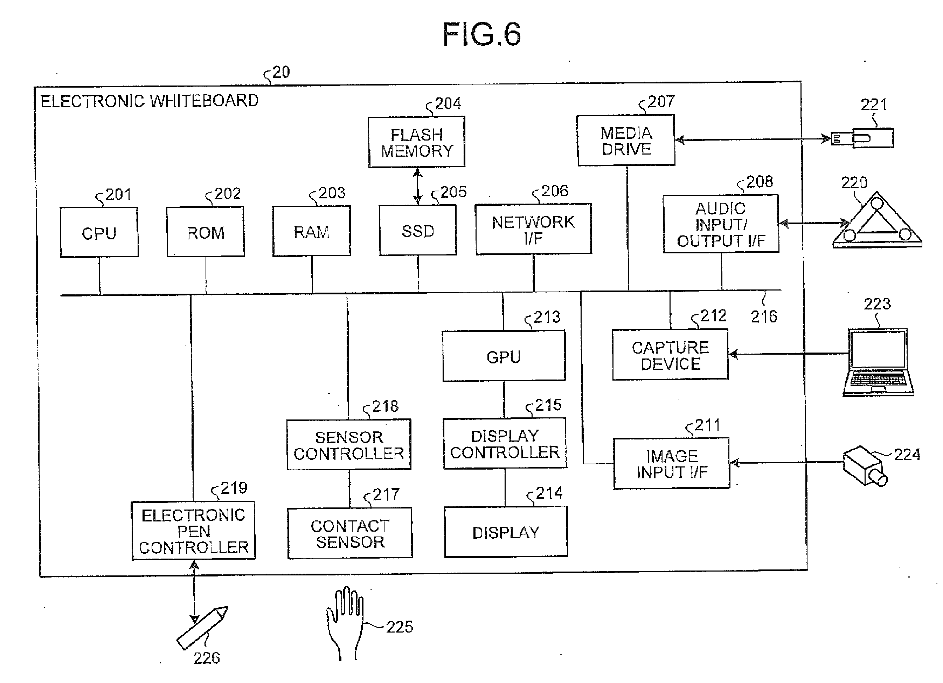

FIG. 6 is a diagram illustrating a hardware configuration of the electronic whiteboard 20. The electronic whiteboard 20 further includes a CPU 201, a ROM 202, a RAM 203, a flash memory 204, and SSD 205, a network I/F 206, a media drive 207, an audio input/output I/F 208, an image input I/F 211, a capture device 212, a graphics processing unit (GPU) 213, the display 214, a display controller 215, and a bus line 216.

The CPU 201 controls an overall operation of the electronic whiteboard 20. The ROM 202 stores a program such as IPL used for driving of the CPU 201. The RAM 203 is used as a work area of the CPU 201. The flash memory 204 stores various types of data such as a transfer control program of the electronic whiteboard 20. The electronic whiteboard 20 may include an EEPROM or the like in place of the flash memory 204. The SSD 205 controls reading/writing of the various types of data to/from the flash memory 204 according to the control of the CPU 201. The network I/F 206 controls communication through the network 3. The media drive 207 controls reading/writing (storage) of data to/from the recording medium 221 such as a flash memory attachable/detachable to/from the electronic whiteboard 20. The audio input/output I/F 208 performs processing of input/output of a sound signal from/to the microphone speaker 220 according to the control of the CPU 201.

The image input I/F 211 inputs an image captured with the camera 224. The capture device 212 takes in a still image or a moving image displayed on a display of the notebook computer 223, for example. The GPU 213 is a data processing unit that executes graphics processing. The GPU. 213 executes processing of drawing an image according to information input by the user. Further, the GPU 213 executes processing of combining the drawn image, and the image taken in by the capture device 212 and the image input from the camera 224. The display controller 215 performs control and management of screen display for outputting an output image from the GPU 213 to the display 214 or the like. The bus line 216 is an address bus, a data bus, or the like for connecting the configuration elements.

Further, the electronic whiteboard 20 includes a contact sensor 217, a sensor controller 218, and an electronic pen controller 219.

The contact sensor 217 detects a contact operation to the display 214 with the hand 225 of the user or the electronic pen 226, and an input of information. The sensor controller 21B controls processing of the contact sensor 217 according to the control of the CPU 201.

As an example, the contact sensor 217 inputs coordinates and detects coordinates in an infrared ray cut-off system. A method of inputting and detecting coordinates is a method of emitting a plurality of infrared rays in parallel to the display 214 by two light emitting/receiving devices (not illustrated) installed in both upper ends of the display 214, allowing the infrared rays to be reflected at a reflection member provided in a periphery of the display 214, and receiving light that is returned on the same optical path as an optical path of light emitted by a light receiving element. The contact sensor 217 outputs identifications (IDs) of the infrared rays emitted by the two light emitting/receiving device and cut off by an object, to the sensor controller 218. The sensor controller 218 identifies a coordinate position that is a contact position of an object.

Further, as the contact sensor 217, not only the infrared ray cut-off system, but also various detecting units such as a touch panel in an electrostatic capacity system, which identifies the contact position by detecting change of an electrostatic capacity, a touch panel in a resistive film system, which identifies the contact position according to change of voltages of two facing resistive films, and a touch panel in an electromagnetic induction system, which identifies the contact position by detecting electromagnetic induction caused by a contact object being in contact with the display unit may be used.

The electronic pen controller 219 determines existence or non-existence of touch of a pen point or touch of a pen bottom to the display 214 by performing Communication with the electronic pen 226. Note that the electronic pen controller 219 may determine not only the existence or non-existence of touch of a pen point or touch of a pen bottom of the electronic pen 226 to the display 214, but also existence or non-existence of touch of a portion of the electronic pen 226 grasped by the user or of another portion of the electronic pen.

Appearance and Hardware Configuration of Smart Phone 30

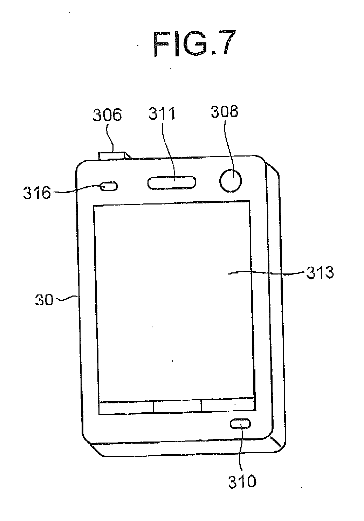

FIG. 7 is a diagram illustrating an example of an appearance of the smart phone 30. As illustrated in FIG. 7, the smart phone 30 is a thin electronic device having an approximately rectangular principal plane with a size portable with the hand of the user. The smart phone 30 has functions of information processing and communication similar to a computer, for example, and also allows a telephone call.

The smart phone 30 includes a touch panel display 313 on its principal plane. Further, the smart phone 30 includes a power source switch 306, a camera 308, a microphone 310, and a speaker 311. Further, the smart phone 30 includes a proximity sensor 316 for detecting a use form in which a face or the like of the user comes close thereto and a telephone call is made.

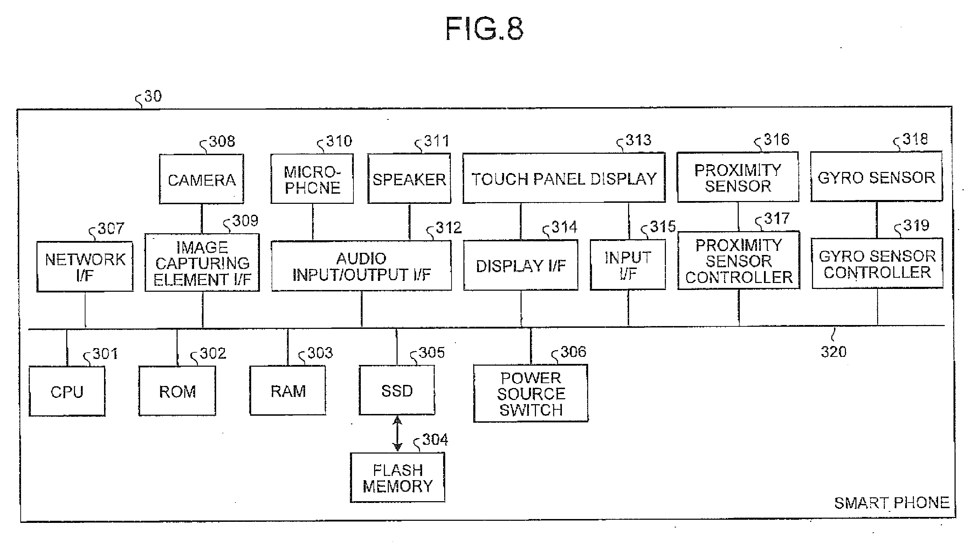

FIG. 8 is a diagram illustrating a hardware configuration of the smart phone 30. The smart phone 30 includes a CPU 301, a ROM 302, a RAM 303, a flash memory 304, an SSD 305, a power source switch 306, a network I/F 307, a camera 308, an image capturing element I/F 309, a microphone 310, a speaker 311, an audio input/output I/F 312, a touch panel display 313, a display I/F 314, an input I/F 315, the proximity sensor 316, a proximity sensor controller 317, a gyro sensor 318, a gyro sensor controller 319, and a bus line 320.

The CPU 301 controls an overall operation of the smart phone 30. The ROM 302 stores a program such as an IPL used for driving of the CPU 301. The RAM 303 is used as a work area of the CPU 301. The flash memory 304 stores various types of data such as a transfer control program of the smart phone 30, the image data, and the sound data. The smart phone 30 may include an EEPROM or the like in place of the flash memory 304. The SSD 305 controls reading/writing of the various types of data to/from the flash memory 304 according to the control of the CPU 301. The power source switch 306 is a button for switching ON/OFF of a power source of the smart phone 30. The network I/F 307 control communication through the network 3.

The camera 308 captures the image of the object and obtains the image data according to the control of the CPU 301. The image capturing element I/F 309 controls driving of the camera 306. The microphone 310 inputs a sound. The speaker 311 outputs a sound. The audio input/output I/F 312 performs processing of input/output of a sound signal from/to the microphone 310 and the speaker 311 according to the control of the CPU 301.

The touch panel display 313 displays an image according to the image data, an operation icon, and the like. Further, the touch panel display 313 receives an operation input given on a screen. The display I/F 314 transmits the image data to the touch panel display 313 according to the control of the CPU 301. The input I/F 315 detects the operation input given to the touch panel display 313. The bus line 320 is an address bus, a data bus, or the like for connecting the configuration elements.

The proximity sensor 316 detects a distance value between the smart phone 30 and an external object. Accordingly, the proximity sensor 316 can detect that the face or the like of the user has come close to the touch panel display 313 of the smart phone 30. The proximity sensor controller 317 controls processing of the proximity sensor 316 according to the control of the CPU 301.

The gyro sensor 318 detects a posture of the smart phone 30. For example, the gyro sensor 318 detects whether the touch panel display 313 is arranged downward, or arranged upward. The gyro sensor controller 319 controls processing of the gyro sensor 318 according to the control of the CPU 301.

With such proximity sensor 316 and gyro sensor 318, the CPU 301 can determine the use form of the smart phone 30 by the user.

For example, when it is determined that a distance value between the smart phone 30 and the external object has become shorter than a fixed value according to a detection result of the proximity sensor 316, the CPU 301 can determine that the smart phone 30 is in a use form as a telephone (a form in which the user brings his/her ear close to the speaker 311, and uses the smart phone 30 without seeing the touch panel display 313). Further, when it is determined that the distance value between the smart phone 30 and the external object becomes the fixed value or more according to the detection result of the proximity sensor 316, the CPU 301 can determine that the smart phone 30 is in a use from as an information terminal (a form in which the user uses the smart phone 30 while seeing the touch panel display 313).

Further, for example, when it is determined that the touch panel display 313 is arranged downward according to the detection result of the gyro sensor 318, the CPU 301 can determine that the smart phone 30 is in a use form in which the user does not use the screen. When it is determined that the touch panel display 313 is arranged upward according to the detection result of the gyro sensor 318, the CPU 301 can determine that the smart phone 30 is in a use form in which the user uses the screen.

### Hardware Configuration of Transfer Control Device 50 and Program Providing Device 60

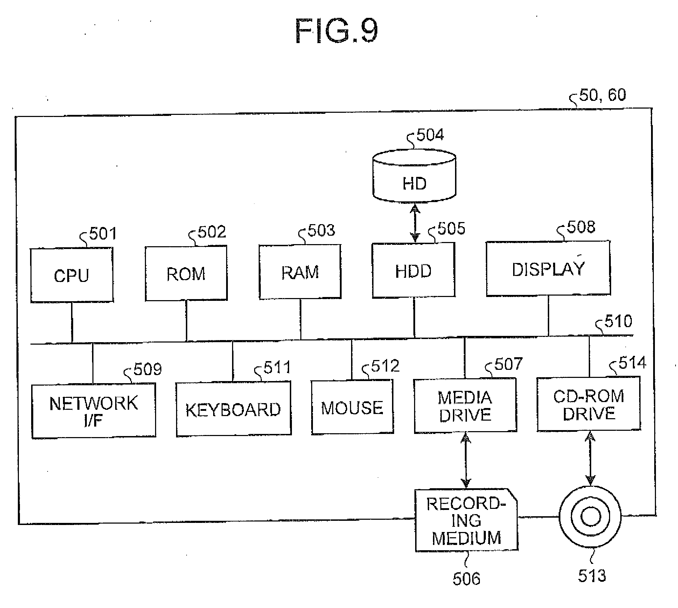

FIG. 9 is a diagram illustrating a hardware configuration of the transfer control device 50 and the program providing device 60. Note that appearances of the transfer control device 50 and the program providing device 60 are as a typical server or computer, and thus description is omitted. Further, the program providing device 60 has a hardware configuration similar to the transfer control device 50, and thus a hardware configuration of the transfer control device 50 will be representatively described.

The transfer control device 50 includes a CPU 501, a ROM 502, a RAM 503, a hard disk (HD) 504, a hard disk drive (HDD) 505, a media drive 507, a display 508, a network I/F 509, a bus line 510, a keyboard 511, a mouse 512, and a CD-ROM drive 514.

The CPU 501 controls an overall operation of the transfer control device 50. The ROM 502 stores a program such as an IPL used for driving of the CPU 501. The RAM 503 is used as a work area of the CPU 501. The HD 504 stores various types of data such as a transfer control program for the transfer control device 50. The HDD 505 controls reading/writing of the various types of data to/from the HD 504 according to the control of the CPU 501. The media drive 507 controls reading/writing (storage) of data to/from the attachable/detachable recording medium 506 such as a flash memory. The display 508 displays various types of information such as a cursor, a menu, a window, a character, and an image. The network I/F 509 controls communication through the network 3.

The keyboard 511 includes a plurality of keys for inputting characters, numerical values, various instructions, and the like. The mouse 512 is used to select and executes the various instructions, select an object to be processed, and move the cursor, for example. The CD-ROM drive 514 controls reading/writing of the various types of data to/from a compact disc read only memory (CD-ROM) 513 as an example of the attachable/detachable recording medium. The bus line 510 is an address bus, a data bus, or the like for connecting the configuration elements.

Note that FIG, 9 illustrates the hardware configuration of when the transfer control device 50 is configured from one computer. However, the transfer control device 50 may be composed of a plurality of computers mutually connected by a network or the like, and operating cooperatively with one another.

### Function Configuration of Call Terminal 10 and Smart Phone 30

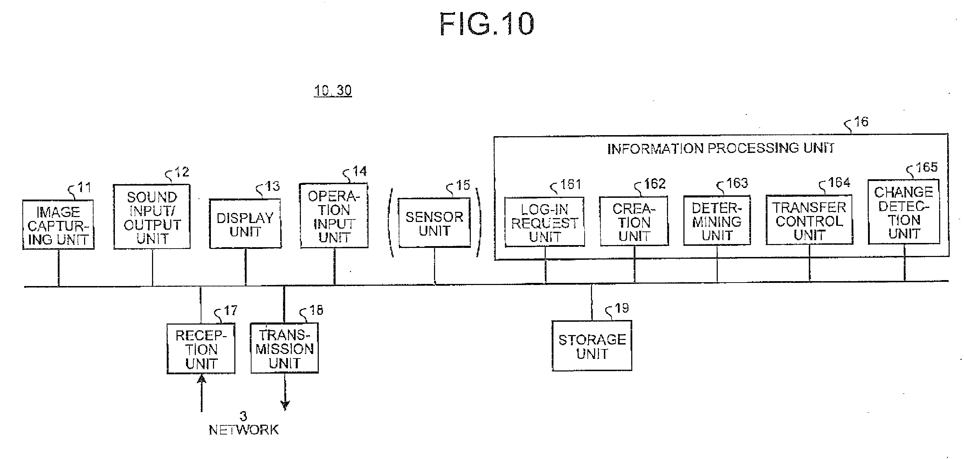

FIG. 10 is a diagram illustrating a functional configuration of the call terminal 10 and the smart phone 30.

Functions of respective blocks illustrated in FIG. 10 of the call terminal 10 are realized by the CPU 101 illustrated in FIG. 4 executing the transfer control program, and working in cooperation with other hardware resources as needed. Further, the functions of the respective blocks illustrated in FIG. 10 of the smart phone 30 are realized by the CPU 301 illustrated in FIG. 8 executing the transfer control program, and working in cooperation with other hardware resources as needed. Note that there is a difference in that the call terminal 10 does not include a sensor unit 15 while the smart phone 30 includes the sensor unit 15. However, other function blocks are similar between the call terminal 10 and the smart phone 30. Therefore, the functions of the smart phone 30 will be representatively described.

The smart phone 30 includes an image capturing unit 11, a sound input/output unit 12, a display unit 13, an operation input unit 14, the sensor unit 15, an information processing unit 16, a reception, unit 17, a transmission unit 18, and a storage unit 19.

The image capturing unit 11 captures an image of the object, and generates the image data. The sound input/output unit 12 collects a sound in the environment, and converts the sound into the sound data or emits the sound outside.

The display unit 13 displays the image data. The operation input unit 14 receives the operation input from the user.

The sensor unit 15 detects the use form of the smart phone 30 by the user. As an example, the sensor unit 15 detects whether the smart phone 30 is in the use form as a telephone (the form in which the user brings his/her ear close to the speaker 311, and uses the smart phone 30 without seeing the touch panel display 313), or in the use form as an information terminal (the form in which the user uses the smart phone 30 while seeing the touch panel display 313). Further, as an example, the sensor unit 15 detects whether the smart phone 30 is in the use form without using the screen, or the use form using the screen. The sensor unit 15 is realized by the proximity sensor 316, the gyro sensor 318, the CPU 301, and the like.

The information processing unit 16 executes various types of data processing. The information processing unit 16 includes a log-in request unit 161, a creation unit 162, a determining unit 163, a transfer control unit 164, and a change detection unit 165.

The log-in request unit 161 requests the transfer control device 50 to perform log-in authentication through the network 3 upon reception of a power source ON. The creation unit 162 creates and updates a screen for selection of a transfer destination of the content data. The determining unit 163 periodically determines whether the smart phone 30 is normally operated. The transfer control unit 164 executes control of transmission of the content data to the transfer control device 50 and control of reception of the content data from the transfer control device 50.

The change detection unit 165 detects change of a type of the content data usable by the device. Then, the change detection unit 165 transmits a change notification to the transfer control device 50 through the network 3 when having detected the change of a type of the usable content data.

As an example, the change detection unit 165 transmits the change notification to the transfer control device 50 when the hardware configuration of the device has been changed. Further, the change detection unit 165 transmits the change notification to the transfer control device 50 when an operation mode has been changed. Further, the change detection unit 165 transmits the change notification to the transfer control device 50 when the use form has been changed. Further, the change detection unit 165 transmits the change notification to the transfer control device 50 when quality of processable content data has been changed.

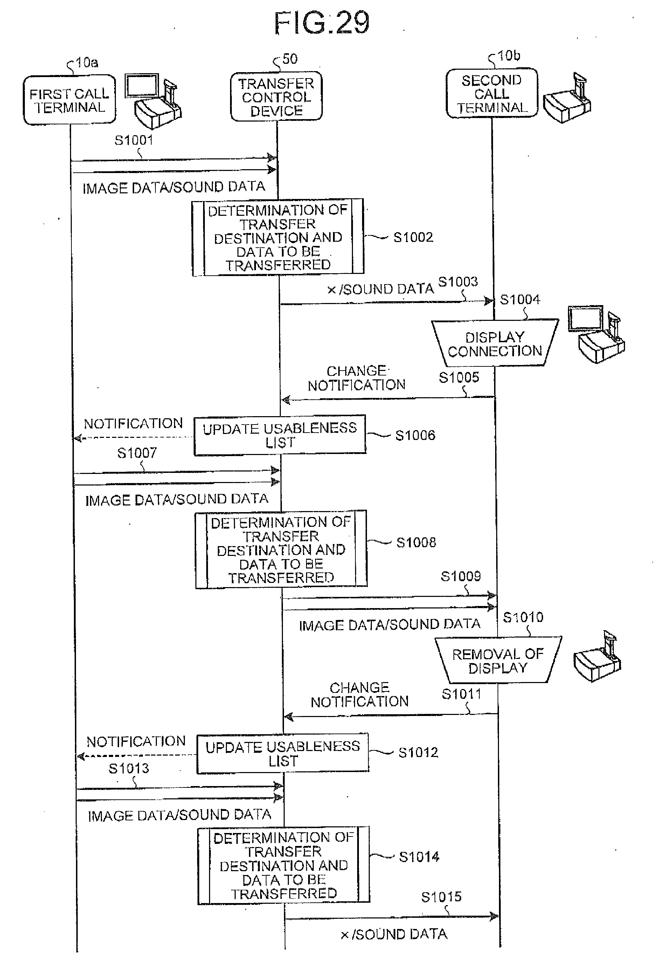

Note that a specific example of when the change detection unit 165 transmits the change notification will be described in more detail with reference to FIG. 29 and subsequent drawings.

The reception unit 17 receives the various types of data from the transfer control device 50 through the network 3. The transmission unit 18 transmits the various types of data to the transfer control device 50 through the network 3. The storage unit 19 stores the program executed by the device, the image data, the sound data, various types of setting data, and/or the like.

### Functional Configuration of Electronic Whiteboard 20

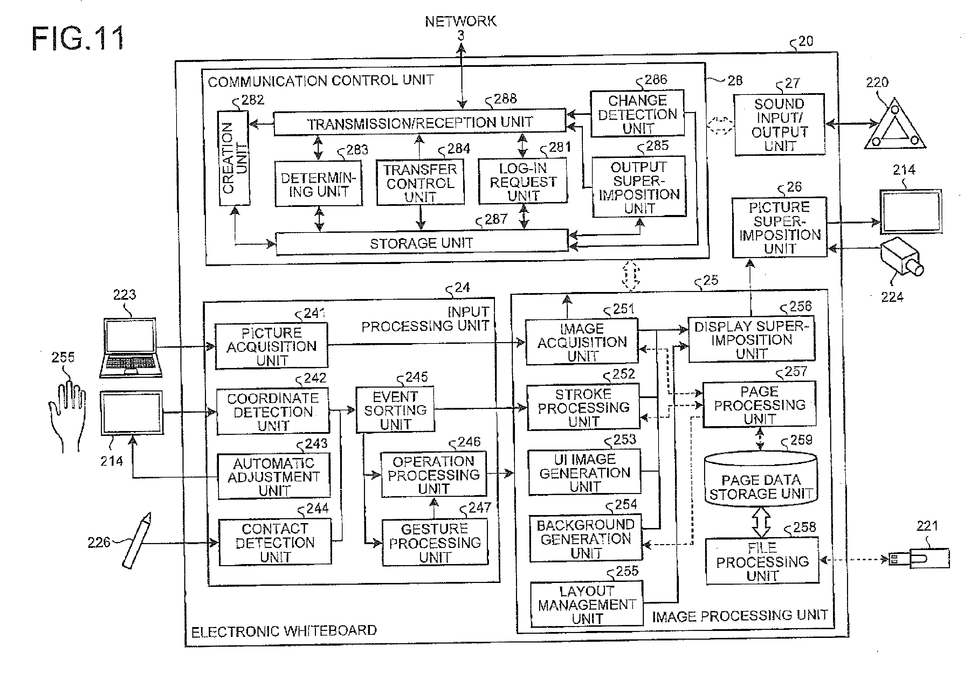

FIG. 11 is a diagram illustrating a functional configuration of the electronic whiteboard 20. Functions of respective blocks illustrated in FIG. 11 of the electronic whiteboard 20 are realized by the CPU 201 illustrated in FIG. 6 executing the transfer control program, and working in cooperation with other hardware resources as needed.

The electronic whiteboard 20 includes an input processing unit 24, an image processing unit 25, a picture superimposition unit 26, a sound input/output unit 27, and a communication control unit 28. The input processing unit 24 executes processing of inputting the image data to the electronic whiteboard 20, and processing of receiving an operation input to the electronic whiteboard 20. The image processing unit 25 executes processing of displaying an image on the display 214.

The picture superimposition unit 26 superimposes an image captured by the camera 224 on an image generated by the image processing unit 25 (for example, by performing picture-in-picture processing), and executes processing of displaying the superimposed image on the display 214. The sound input/output unit 27 collects a sound in the environment, converts the sound into the sound data, and emits the sound outside. The communication control unit 28 executes transfer control of the content data with the transfer control device 50.

Hereinafter, configurations of the respective units will be further described.

### Functional Configuration of Input Processing Unit 24

The input processing unit 24 includes a picture acquisition unit 241, a coordinate detection unit 242, an automatic adjustment unit 243, a contact detection unit 244, an event sorting unit 245, an operation processing unit 246, a gesture processing unit 247.

The picture acquisition unit 241 acquire an output picture of a picture output device such as the computer 223 connected with the cable or the like. When having received the image signal from the picture output device, the picture acquisition unit 241 analyze the image signal, derives image information such as a resolution of an image frame that is a display image of the picture output device formed with the image signal, and the frequency of update of the image frame, and outputs the image information to an image acquisition unit 251 described later.

The coordinate detection unit 242 detects a coordinate position of an event (a touch operation on the display 214 with the hand 225 of the user) caused according to an operation of the user on the display 214, based on a detection output of the contact sensor 217. Further, the coordinate detection unit 242 detects a touched area.

The automatic adjustment unit 243 is started at the time of start of the electronic whiteboard 20, and adjusts parameters of image processing of a sensor camera in an optical sensor system of the contact sensor 217 so that the contact sensor 217 can output an appropriate value to the coordinate detection unit 242.

The contact detection unit 244 detects an event (a press (touch) operation of the pen point of the electronic pen 226 or the pen bottom of the electronic pen 226 on the display 214) caused according to an operation of the user, based on a detection result of the electronic pen controller 219.

The event sorting unit 245 sorts the coordinate position of the event detected by the coordinate detection unit 242, and a detection result detected by the contact detection unit 244 into respective events of stroke drawing, an UI operation, and a gesture operation.

The operation processing unit 246 executes various operations according to an element of the UI with which the event is generated, from the operation determined as the UI operation by the event sorting unit 245. Examples of the element of the UI include a button, a list, a check box, and a text box.

The gesture processing unit 247 executes an operation corresponding to the operation determined as the gesture operation by the event sorting unit 245.

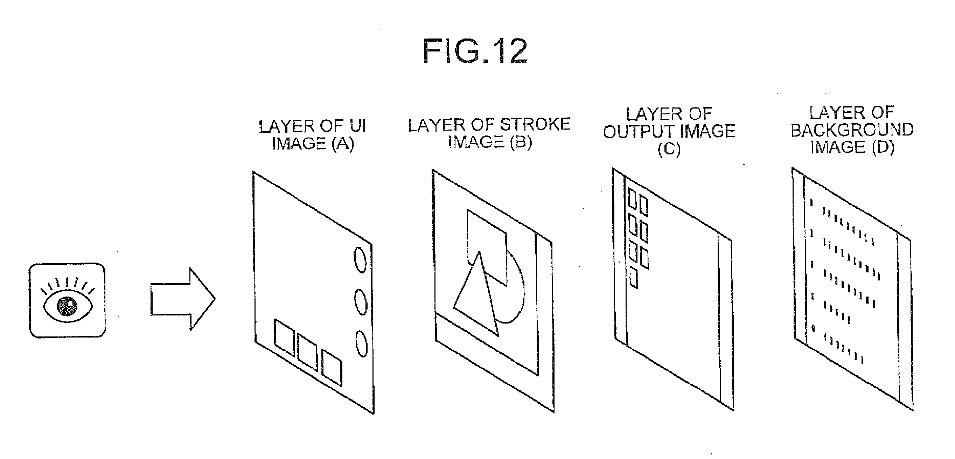

Here, the stroke drawing, the UI operation, and the gesture operation will be described with reference to FIG. 12. Note that FIG. 12 illustrates a configuration diagram of image layers.

First, the "stroke drawing" is an event from when the user presses the electronic pen 226 on the display 214, moves the electronic pen 226 in the pressing state, to when the user finally takes the electronic pen 226 off the display 214, when a stroke image (B) described later and illustrated in FIG. 12 is displayed on the display 214. With the stroke drawing, for example, an alphabet such as "S" and "T" is drawn on the display 214. Note that the "stroke drawing" includes not only drawing of an image, but also events such as deletion of an already drawn image and editing of the drawing image.

The "UI operation" is an event in which the user presses a predetermined position with the electronic pen 226 or the hand 225, when a UI image (A) described later and illustrated in FIG. 12 is displayed on the display 214. With the UI operation, for example, a color and/or a width of a line drawn with the electronic pen 226, and/or the like are set.

The "gesture operation" is an event in which the user touches or moves the display 214 with the hand 225, when the stroke image (B) illustrated in FIG. 12 and described later is displayed on the display 214. With the gesture operation, for example, the user moves the hand 225 in a state where the user keeps the hand 225 touched on the display 214, thereby to enlarge (or reduce) an image, change a display area, or switch a page, for example.

### Functional Configuration of Image Processing Unit 25

Referring back to FIG. 11, the functional configuration of the image processing unit 25 will be described in detail. The image processing unit 25 performs processing of superimposing image layers as illustrated in FIG. 12, and the like.

The image processing unit 25 includes an image acquisition unit 251, a stroke processing unit 252, a UI image generation unit 253, a background generation unit 254, a layout management unit 255, a display superimposition unit 256, a page processing unit 257, a file processing unit 258, and a page data storage unit 259.

The image acquisition unit 251 acquires each frame, as an image, from a picture acquired in the picture acquisition unit 241. This image corresponds to an output image (C) illustrated in FIG. 12.

The stroke processing unit 252 draws an image, deletes a drawn image, or edits the drawn image, based on the event related to the stroke drawing sorted by the event sorting unit 245. The image according the stroke drawing corresponds to the stroke image (B) illustrated in FIG. 12.

The UI image generation unit 253 generates a user interface (UI) image set in the electronic whiteboard 20 in advance. The UI image corresponds to the UI image (A) illustrated in FIG. 12.

The background generation unit 254 generates a background image displayed on the display 214. The background image corresponds to a background image (D) illustrated in FIG. 12. A pattern of the background image is plain, grid display, or the like.

The layout management unit 255 manages layout information indicating layouts of respective images output from the image acquisition unit 251, the stroke processing unit 252, the UI image generation unit 253, and the background generation unit 254 to the display superimposition unit 256. Accordingly, the layout management unit 255 can instruct the display superimposition unit 256 to display or not to display the output image (C) and the stroke image (B) in which position in the UI image (A) and the background image (D).

The display superimposition unit 256 superimposes the output image (C) from the image acquisition unit 251, the stroke image (B) from the stroke processing unit 252, the UI image (A) from the UI image generation unit 253, and the background image (D) from the background generation unit 254, according to a layout specified by the layout management unit 255. Accordingly, as illustrated in FIG. 12, even if the respective images are layered, the images have a configuration of layers of the UI image (A), the stroke image (B), the output image (C), and the background image (D) in the order viewed by the user.

Further, the display superimposition unit 256 can exclusively superimpose the image (C) or the image (D) illustrated in FIG. 12 on the image (A) and the image (B) by switching the image (C) and the image (D). For example, when the cable between the electronic whiteboard 20 and the picture output device (the computer 223 or the like) has been plugged off in a state where the image (A), the image (B), and the image (C) are displayed in the beginning, the display superimposition unit 256 can eliminate the image (C) from objects to be superimposed according to specification of the layout management unit 255, and display the image (D). In this case, the display superimposition unit 256 also performs enlargement of the display, reduction of the display, and processing of moving the display area.

The page processing unit 257 puts the data of the stroke image (B) and the data of the output image (C) together into one page data, and stores the page data in the page data storage unit 259. Further, the page processing unit 257 can cause the picture superimposition unit 26 to reproduce the page data on the display 214, by transmitting the page data stored in the page data storage unit 259 to the display superimposition unit 256 through the image acquisition unit 251.

Further, the page processing unit 257 can cause the communication control unit 28 to transmit the page data (stroke arrangement data and media data) to another electronic whiteboard 20 or the call terminal 10, by transmitting the page data stored in the page data storage unit 259 to the communication control unit 28 through the image acquisition unit 251.

Here, the stroke arrangement data is an example of the coordinate data. Further, the media data is an example of the image data. The page data is an example of combined data of the coordinate data and the image data.

Further, the page processing unit 257 can enable re-editing of a stroke, by transmitting the page data to the stroke processing unit 252. Further, the page processing unit 257 can delete and copy the page data.

Further, when reading the page data from the page data storage unit 259, the page processing unit 257 divides the page data, which have been put together, into the stroke arrangement data that indicates the stroke image (B), and the media data that indicates the background image (D). That is, the data of the output image (C) displayed on the display 214 at the time when the page processing unit 257 stores the page data in the page data storage unit 259 is once stored in the page data storage unit 259, and is then read out as the media data that indicates the background image (D) when being read out from the page data storage unit 259. The page processing unit 257 then outputs the stroke arrangement data that indicates the stroke image (B), of the page data read out from the page data storage unit 259, to the stroke processing unit 252. Further, the page processing unit 257 outputs the media data that indicates the background image (D), of the page data read out from the page data storage unit 259, to the image acquisition unit 251.

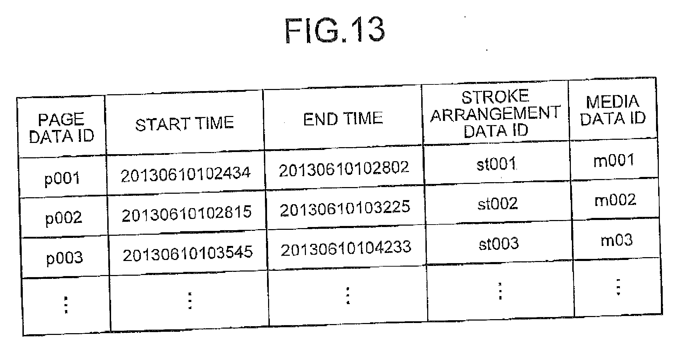

The page data storage unit 259 stores the page data as illustrated in FIG. 13.

The file processing unit 258 detects abnormal termination after the electronic whiteboard 20 is abnormally terminated, and restores unstored page data. For example, in a case of normal termination, the file processing unit 258 acquires the page data from the page data storage unit 259, and records the page data in the recording medium 221, as a PDF file. However, in the case of abnormal termination such as shutdown of a power source or the like, the page data remains recorded in the page data storage unit 259. Therefore, when the power source is turned ON again, the file processing unit 258 reads out the page data from the page data storage unit 259 to perform the restoration. Further, the file processing unit 258 reads the PDF file from the recording medium 221, and stores pages in the page data storage unit 259, as page data.

FIG. 13 is a conceptual diagram illustrating the page data. The page data is data of one page (stroke data and image data) displayed on the display 214. Note that there are many types of parameters included in the page data, and thus here, description of content of the page data will be given by dividing it into FIGS. 13 to 16.

In the page data, as illustrated in FIG. 13, a page data ID for identifying an arbitrary one page, a start time that indicates a time at which display of the page is started, an end time that indicates a time at which rewriting of content of a page with a stroke or a gesture is stopped, a stroke arrangement data ID for identifying the stroke arrangement data generated by the stroke with the electronic pen 226 or the hand 225 of the user, and a media data ID for identifying the media data are stored in association with one another. The stroke arrangement data is data for causing the stroke image (B) illustrated in FIG. 12 to be displayed on the display 214. The media data is data for causing the background image (D) illustrated in FIG. 12 to be displayed on the display 214.

With such page data, for example, when the user draws an alphabet "S" with the electronic pen 226, the "S" is drawn with a single stroke. Therefore, one alphabet [S] is indicated by one stroke data ID. However, when the user draws an alphabet "T" with the electronic pen 226, the "T" is drawn with two strokes. Therefore, one alphabet "T" is indicated by two stroke data IDs.

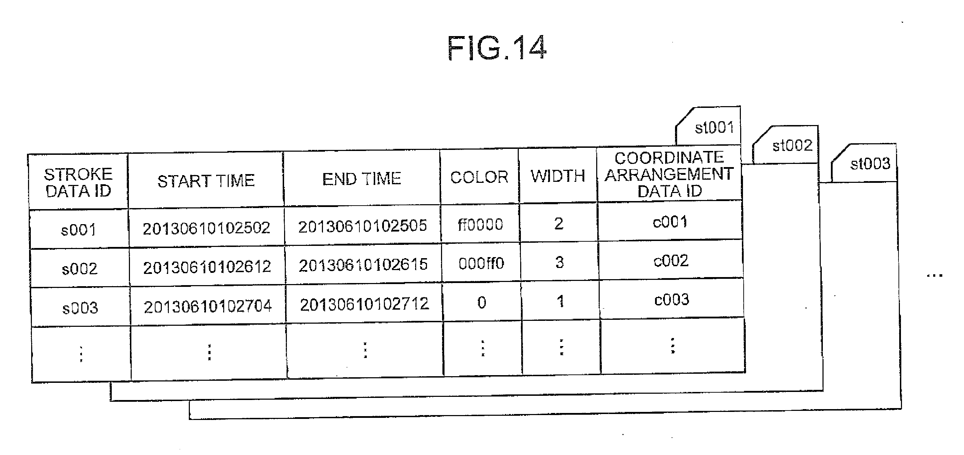

FIG. 14 is a conceptual diagram illustrating the stroke arrangement data. The stroke arrangement data includes detailed information as illustrated in FIG. 14. As illustrated in FIG. 14, one stroke arrangement data is indicated by a plurality of stroke data. One stroke data indicates a stroke data ID for identifying the stroke data, a start time that indicates a time of start of one stroke, an end time that indicates a time of an end of writing of one stroke, a color of the stroke, a width of the stroke, and a coordinate arrangement data ID for identifying arrangement of passage points of the stroke.

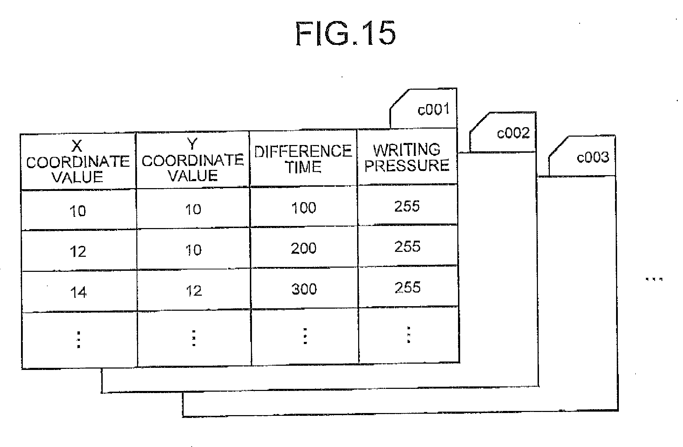

FIG. 15 is a conceptual diagram illustrating coordinate arrangement data. The coordinate arrangement data includes detailed information as illustrated in FIG. 15.

As illustrated in FIG. 15, the coordinate arrangement data indicates information of one point (X coordinate value, Y coordinate value) on the display 214, a time (ms) of a difference of when the one point is passed through from a start time of a stroke, and writing pressure of the electronic pen 226 on the one point. That is, a group of one points illustrated in FIG. 15 is indicated by the one coordinate arrangement data illustrated in FIG. 14. For example, when the user draws the alphabet "S" with the electronic pen 226, the "S" is drawn with a single stroke, and the electronic pen 226 passes through a plurality of passage points by the completion of the drawing of "S". The coordinate arrangement data indicates the information of the plurality of passage points.

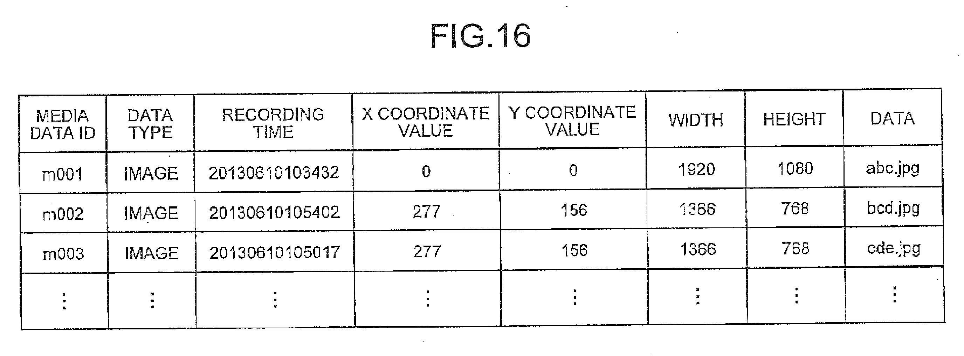

FIG. 16 is a conceptual diagram illustrating the media data. The media data in the page data illustrated in FIG. 13 includes detailed information as illustrated in FIG. 16. The media data indicates, as illustrated in FIG. 16, a media data ID in the page data illustrated in FIG. 13, a data type of the media data, a record time at which the page data is recorded from the page processing unit 257 to the page data storage unit 259, the position (X coordinates value, Y coordinate value) of an image and a size (the width and the height) of the image displayed on the display 214 with the page data, and data that indicates content of the media data, in association with one another. Among the information, the position of the image displayed on the display 214 with the page data indicates an upper left end position of the image displayed with the page data, when an upper left end coordinates of the display 214 are (X coordinate value, Y coordinate value) = (0, 0).

### Functional Configuration of Communication Control Unit 28

Referring back to FIG. 11, a functional configuration of the communication control unit 28 will be described in detail. The communication control unit 28 includes a log-in request unit 281, a creation unit 282, a determining unit 283, a transfer control unit 284, an output superimposition unit 285, a change detection unit 286, a storage unit 287, and a transmission/reception unit 288.

The log-in request unit 281 transmits a log-in request for requesting log-in authentication to the transfer control device 50 through the network 3 upon reception of a power source ON.

The creation unit 282 creates and updates a screen for selection of a transfer destination of the content data. The determining unit 283 periodically determines whether the electronic whiteboard 20 is normally operated. The transfer control unit 284 executes control of transmission of the content data to the transfer control device 50, and reception of the content data from the transfer control device 50. The output superimposition unit 285 superimposes the image data and the image data.

The change detection unit 286 detects change of a type of the content data usable by the device. Then, the change detection unit 286 transmits a change notification to the transfer control device 50 through the network 3 when having detected the change of a type of the usable content data.

As an example, the change detection unit 286 transmits the change notification to the transfer control device 50 when the hardware configuration of the device has been changed. Further, the change detection unit 286 transmits the change notification to the transfer control device 50 when an operation mode has been changed. Further, the change detection unit 286 transmits the change notification to the transfer control device 50 when the use form has been changed. Further, the change detection unit 286 transmits the change notification to the transfer control device 50 when quality of processable content data has been changed.

Note that a specific example of when the change detection unit 286 transmits the change notification will be described in more detail with reference to FIG. 29 and subsequent drawings.

The storage unit 287 stores the program executed by the device, the image data, the sound data, various types of setting data, and the like. The transmission/reception unit 288 receives various types of data from the transfer control device 50 through the network 3. Further, the transmission/reception unit 288 transmits various types of data to the transfer control device 50 through the network 3.

### Functional Configuration of Transfer Control Device 50

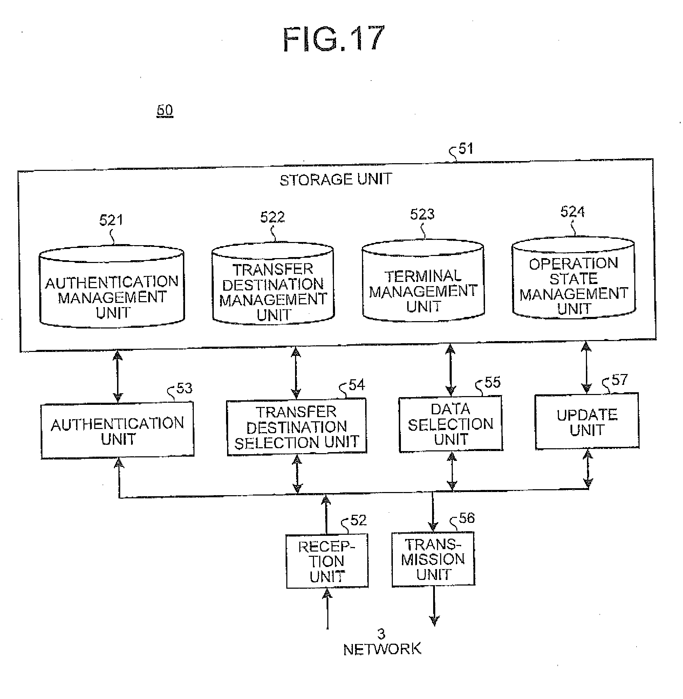

FIG. 17 is a diagram illustrating a functional configuration of the transfer control device 50. Functions of respective blocks illustrated in FIG. 17 of the transfer control device 50 are realized by the CPU 501 illustrated in FIG. 9 executing the transfer control program, and working in cooperation with other hardware resources as needed.

The transfer control device 50 includes a storage unit 51, a reception unit 52, an authentication unit 53, a transfer destination selection unit 54, a data selection unit 55, a transmission unit 56, and an update unit 57.

The storage unit 51 stores various types of data. The storage unit 51 includes an authentication management unit 521, a transfer destination management unit 522, a terminal management unit 523, and an operation state management unit 524.

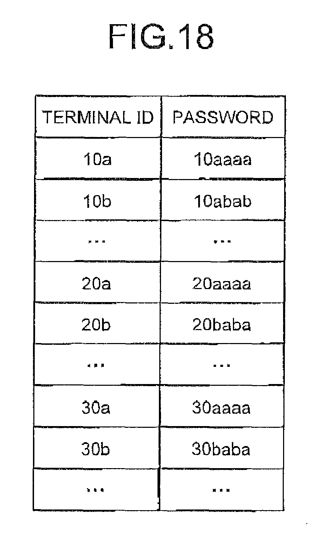

The authentication management unit 521 stores information for authenticating respective terminal devices 2 (the call terminal 10, the electronic whiteboard 20, and the smart phone 30). As an example, the authentication management unit 521 stores an authentication management table as illustrated in FIG. 18. The authentication management table of FIG. 18 manages identification information (terminals ID) of the respective terminal devices 2, and passwords, in association with one another.

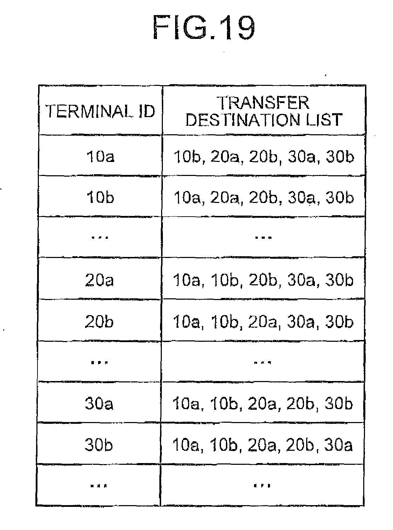

The transfer destination management unit 522 stores identification information of other terminal devices 2 that serve as the transfer destinations of the content data received from the respective terminal devices 2 (the call terminal 10, the electronic whiteboard 20, and the smart phone 30). As an example, the transfer destination management unit 522 stores a transfer destination management table as illustrated in FIG. 19. The transfer destination management table of FIG. 19 manages terminal IDs of the respective terminal devices 2, and a list (transfer destination list) of terminal IDs of other terminal devices 2 that serve as the transfer destinations of the content data, in association with each other.

For example, in the table of FIG. 19, as the transfer destination list of the content data received from the first call terminal 10a, the terminal IDs of the second call terminal 10b, the first electronic whiteboard 20a, the second electronic whiteboard 20b, the first smart phone 30a, and the second smart phone 30b are indicated. Content of the transfer destination list is updated according to a request from a corresponding terminal device 2.

The terminal management unit 523 stores types of the content data usable by the respective terminal devices 2 (the call terminal 10, the electronic whiteboard 20, and the smart phone 30). The content data usable by the terminal device 2 means, for example, data that can be reproduced and output by the terminal device 2.

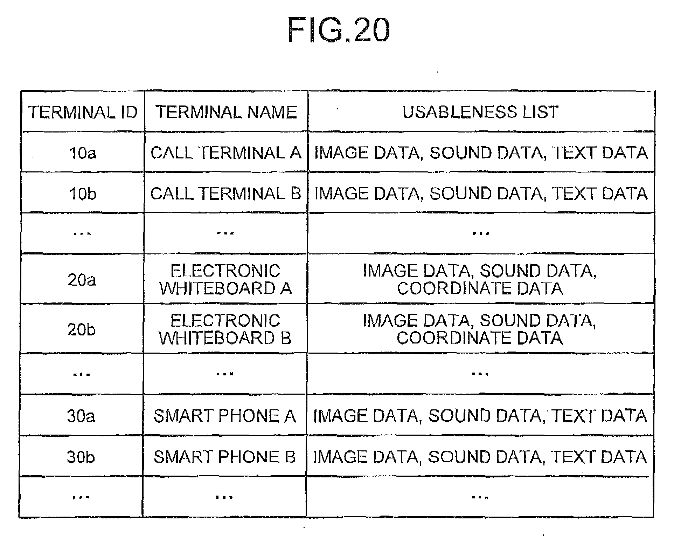

As an example, the terminal management unit 523 stores a terminal management table as illustrated in FIG. 20. The terminal management table of FIG. 20 manages the terminal IDs of the respective terminal devices 2, terminal names, and a usableness list (list of names of types of the content data), in association with one another. For example, in the terminal management table of FIG. 20 indicates, as the usableness list of the first call terminal 10a, the image data, the sound data, and the text data. Content of the usableness list is updated according to the change notification from a corresponding terminal device 2.

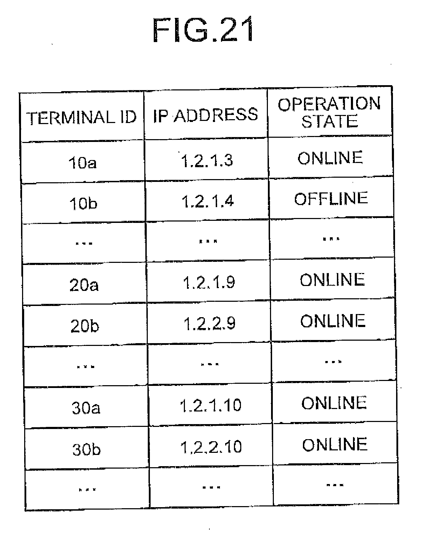

The operation state management unit 524 stores operation states of the respective terminal devices 2 (the call terminal 10, the electronic whiteboard 20, and the smart phone 30). As an example, the operation state management unit 524 stores an operation state table as illustrated in FIG. 21. The operation state table of FIG. 21 manages the terminal IDs of the respective terminal devices 2, IP addresses on the network 3, and whether the respective terminal devices 2 are in an operating state (online or offline), in association with one other. Whether the terminal device 2 is in an operating state is updated according to log-in or log-out of the terminal device 2.

Note that, while the storage unit 51 stores the authentication management unit 521, the transfer destination management unit 522, the terminal management unit 523, and the operation state management unit 524, as separate management units, the storage unit 51 may merge these units partly or entirely to store them. For example, the storage unit 51 may store a table that is obtained by merging, partly or entirely, the authentication management table, the transfer destination management table, the terminal management table, and the operation state management table.

The reception unit 52 receives data from the respective terminal devices 2. For example, the reception unit 52 receives a log-in request and a log-out request from the terminal devices 2. Further, for example, when the content data is transferred from a certain terminal device 2 (the first terminal device 2-1) to at least one another terminal device 2 (the second terminal device 2-2), the reception unit 52 receives at least one type of the content data acquired by the first terminal device 2-1. Further, the reception unit 52 receives the change notification of a type of the usable content data transmitted from any of the terminal devices 2.

When the reception unit 52 has received the log-in request from the terminal device 2, the authentication unit 53 determines whether a password included in the log-in request matches with the password managed in association with the terminal ID of the terminal device 2 that has transmitted the log-in request, by reference to the authentication management table of the authentication management unit 521. When the passwords match with each other, the authentication unit 53 accepts the log-in of the terminal device 2 that has transmitted the log-in request. Then, the authentication unit 53 changes operation information managed in association with the terminal ID of the terminal device 2 that has transmitted the log-in request, in the operation state table stored in the operation state management unit 524, from offline to online. Further, when the reception unit 52 has received the log-out request from a terminal device 2 currently in the login state, the authentication unit 53 access the operation state table stored in the operation state management unit 524, and changes the operation state managed in association with the terminal ID of the terminal device 2 that has transmitted the log-out request, from online to offline.

When having received the content data from the first terminal device 2-1, the transfer destination selection unit 54 refers to the transfer destination list managed in association with the terminal ID of the first terminal device 2-1 that has transmitted the content data, in the transfer destination table of the transfer destination management unit 522. The transfer destination selection unit 54 then selects the terminal device 2 of the terminal ID indicated in the referred transfer destination list, as at least one terminal device 2 (second terminal device 2-2) that serves as the transfer destination of the content data received from the first terminal device 2-1.

When having received the content data from the first terminal device 2-1, the data selection unit 55 refers to the usableness list managed in association with the corresponding terminal ID, in the terminal management table of the terminal management unit 523, for each second terminal device 2-2 selected by the transfer destination selection unit 54. The data selection unit 55 selects the content data indicated in the referred usableness list, from among the at least one type of the content data received from the first terminal device 2-1, as a usable type of the content data.

When having received the content data from the first terminal device 2-1, the transmission unit 56 transmits, to each second terminal device 2-2 selected by the transfer destination selection unit 54, the type of the content data selected by the data selection unit 55, from among the at least one type of the content data received from the first terminal device 2-1.

The update unit 57 updates the corresponding information about the terminal device 2, which is stored in the terminal management unit 523, according to the change notification of a type of the usable content data transmitted from any of the terminal devices 2. To be specific, when having received the change notification from any of the terminal devices 2, the update unit 57 updates the usableness list managed in association with the terminal ID of the terminal device 2 that has transmitted the change notification, in the terminal management table stored in the terminal management unit 523, according to content indicated in the change notification.

Further, when having received selection information of the transfer destination from any of the terminal devices 2, the update unit 57 updates the transfer destination list managed in association with the terminal ID of the terminal device 2 that has transmitted the selection information, in the transfer destination management table stored in the transfer destination management unit 522, according to content indicated in the selection information.

### Outline of Processing of Communication System 1

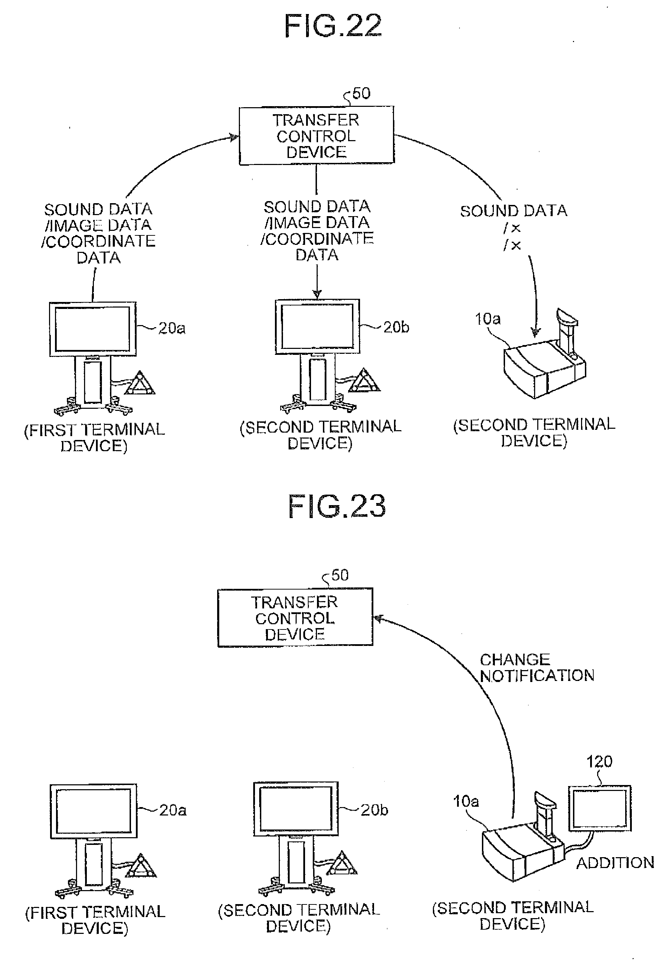

FIG. 22 is a diagram illustrating processing of selecting the content data in the communication system 1. FIG. 22 illustrates an example in which the content data generated by the first electronic whiteboard 20a (first terminal device 2-1) is transferred to the second electronic whiteboard 20b (second terminal device 2-2) and the first call terminal 10a (second terminal device 2-2).

First, as illustrated in FIG. 22, the first electronic whiteboard 20a generates the sound data, the image data, and the coordinate data, as the content data. The first electronic whiteboard 20a transmits the sound data, the image data, and the coordinate data to the transfer control device 50.

When having received the content data from the first electronic whiteboard 20a, the transfer control device 50 refers to the transfer destination list managed in association with the terminal ID of the first electronic whiteboard 20a, in the transfer destination management table stored in the transfer destination management unit 522. The transfer control device 50 selects the terminal device 2 of the terminal ID included in the referred transfer destination list, as the transfer destination of the content data. Here, the transfer control device 50 selects the second electronic whiteboard 20b and the first call terminal 10a, as the transfer destinations of the content data.

Further, the transfer control device 50 refers to the usableness list managed in association with the corresponding terminal ID in the terminal management table stored in the terminal management unit 523, with respect to each selected terminal device 2. The transfer control device 50 then selects the content data to be transmitted, from among the content data received from the first electronic whiteboard 20a, based on the referred usableness lists, with respect to each selected terminal device 2. Here, the transfer control device 50 selects the sound data, the image data, and the coordinate data, for the second electronic whiteboard 20b. Further, the transfer control device 50 selects the sound data, for the first call terminal 10a.

The transfer control device 50 then transmits the selected content data to the selected second electronic whiteboard 20b and first call terminal 10a, respectively.

According to the communication system 1, when the first terminal device 2-1 transmits a plurality of types of content data to the transfer control device 50 once, respective necessary types of content data are transferred to the plurality of second terminal devices 2-2. Therefore, the transmission processing by the first terminal device 2-1 can be simplified. Further, according to the communication system 1, the usable content data is transmitted to the second terminal device 2-2, and unusable content data is not transmitted. Therefore, the reception processing by the second terminal device 2-2 can be simplified.

FIG. 23 is a diagram illustrating change notification processing in the communication system 1. FIG. 23 illustrates an example in which the display 120 is added to the first call terminal 10a.

When the display 120 has been added, the first call terminal 10a comes to be able to use the image data, in addition to the sound data. In this case, the first call terminal 10a transmits the change notification for notifying change of the usable content data, to the transfer control device 50. The transfer control device 50 then updates the usableness list managed in association with the terminal ID of the first call terminal 10a, in the terminal management table stored in the terminal management unit 523, when having received the change notification from the first call terminal 10a.

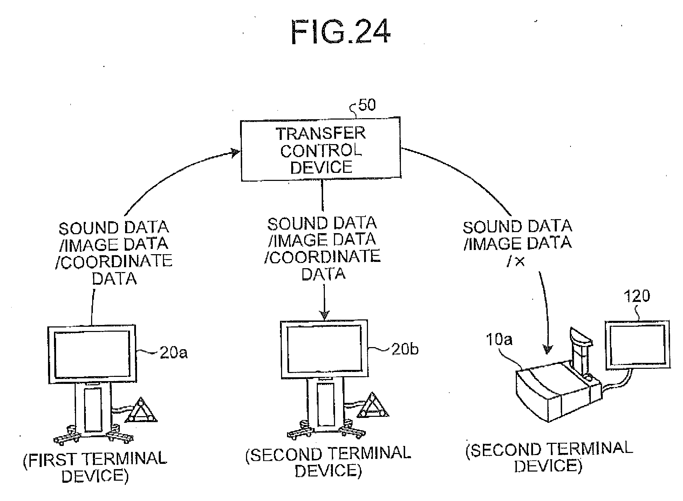

FIG. 24 is a diagram illustrating processing of selecting the content data after the change notification processing in the communication system 1. When having received the content data from the first electronic whiteboard 20a after the usableness list of the first call terminal 10a in the terminal management table stored in the terminal management unit 523 is updated, the transfer control device 50 selects the usable content data, for the first call terminal 10a, by reference to the usableness list after change.

Here, the transfer control device 50 selects the image data, in addition to the sound data, for the first call terminal 10a. The transfer control device 50 then transmits the selected content data (the sound data and the image data) to the first call terminal 10a.

According to the communication system 1, even if the content data usable by the second terminal device 2-2 is changed, a necessary type of content data can be transmitted to the second terminal device 2--2. Therefore, according to the communication system 1, the transfer amount of data between the transfer control device 50 and the second terminal device 2-2 can be decreased. Further, according to the communication system 1, the amount of processing for reception of data in the second terminal device 2-2 can be decreased, and the power consumption can also be reduced.

### Specific Example of Processing Sequence of Communication System 1

### Log-in Processing

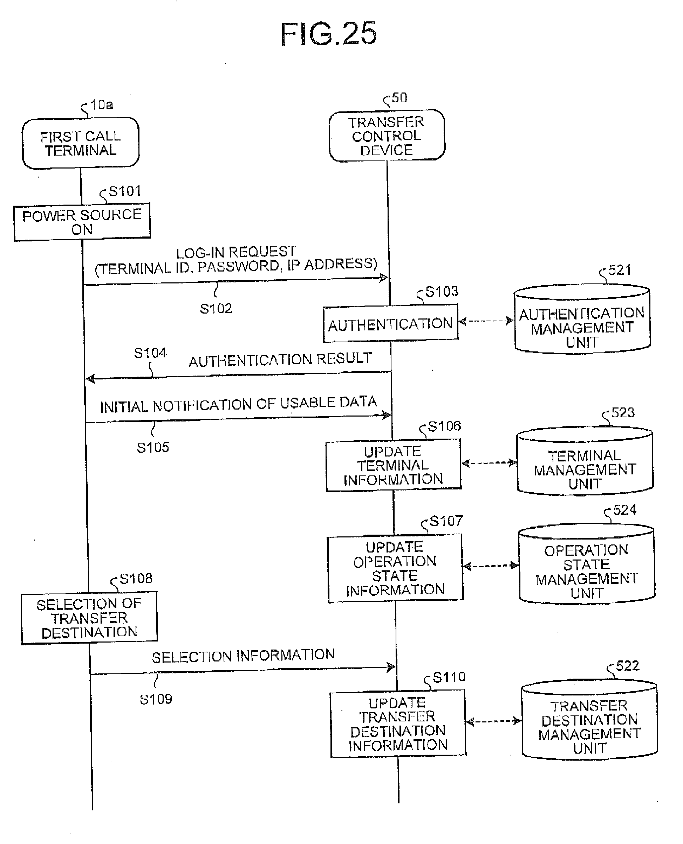

FIG. 25 is a diagram illustrating a sequence of processing of logging in the transfer control device 50 by the first call terminal 10a. Note that, in the example of FIG. 25, processing of the first call terminal 10a will be described. However, log-in processing in other terminal devices 2 is also similar.

First, at step S101, when the user turns the power source switch 109 ON, the power source of the first call terminal 10a is turned ON. Then, at step S102, the log-in request unit 161 of the first call terminal 10a transmits the log-in request to the transfer control device 50 through the network 3 upon ON of the power source.

The log-in request includes the terminal ID, the password, and the IP address of the first call terminal 10a. The terminal ID may be stored in the first call terminal 10a, in advance, or data read from an external recording medium such as a subscriber identity module (SIM) card connected to the first call terminal 10a may be used. Further, the password may be stored in the first call terminal 10a in advance, or may be input by the user. Note that the first call terminal 10a may transmit the log-in request upon an operation of the user, instead of ON of the power source.

Then, at step S103, when having received the log-in request, the authentication unit 53 of the transfer control device 50 authenticates the password by reference to the authentication management table of the authentication management unit 521. Hereinafter, a case in which the authentication is succeeded, and the first call terminal 10a has valid authority will be described.

Then, at step S104, the authentication unit 53 of the transfer control device 50 transmits an authentication result to the first call terminal 10a. Then, at step S105, when having received the authentication result, the change detection unit 165 of the first call terminal 10a transmits an initial notification that indicates a type of usable content data at the present moment.

Then, at step S106, when having received the initial notification, the update unit 57 of the transfer control device 50 updates the usableness list managed in association with the first call terminal 10a, in the terminal management table stored in the terminal management unit 523, according to content of the initial notification.

Then, at step S107, the update unit 57 of the transfer control device 50 changes the operation state managed in association with the first call terminal 10a, in the operation state table stored in the operation state management unit 524, from offline to online, and further, updates the IP address to a value included in the log-in request. Note that the update unit 57 may execute the processing of step S107 immediately after step S103.

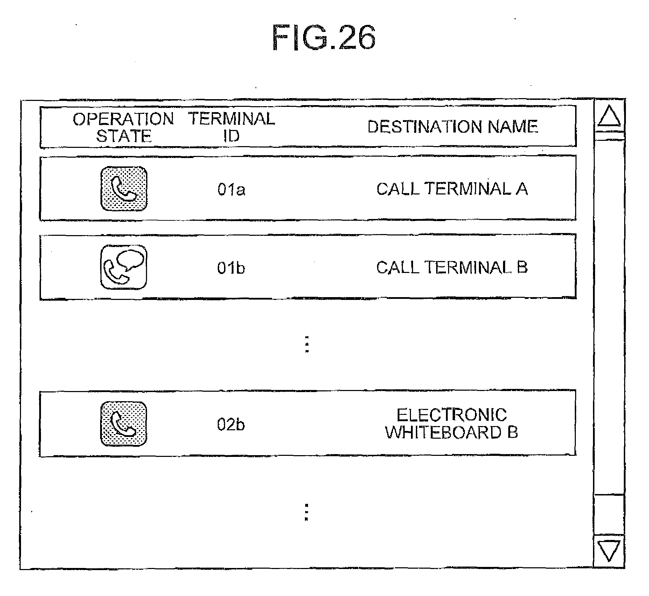

Then, at step S108, the creation unit 162 of the first call terminal 10a displays the selection screen as illustrated in FIG. 26, and prompts the user to select another terminal device 2 that serves as the transfer destination. On the selection screen of FIG. 26, the operation states, the terminal IDs, and the destination names of the terminal devices 2 selectable as the transfer destination are shown. The creation unit 162 receives information for creating such a selection screen from the transfer control device 50 together with information that indicates the authentication result of step S104.

Then, at step S109, when at least one terminal device 2 has been selected from the selection screen illustrated in FIG. 26, the creation unit 162 of the first call terminal 10a transmits selection information of the selected terminal device 2 to the transfer control device 50.

Then, at step S110, when having received the selection information, the update unit 57 of the transfer control device 50 updates the transfer destination list associated with the first call terminal 10a, in the transfer destination management table stored in the transfer destination management unit 522, according to content indicated in the selection information.

With the above processing, the first call terminal 10a can log in the transfer control device 50. Hereinafter, the first call terminal 10a can transmit the content data to another terminal device 2, and also can receive and output the content data from another terminal device 2.

### Normal Transfer Processing

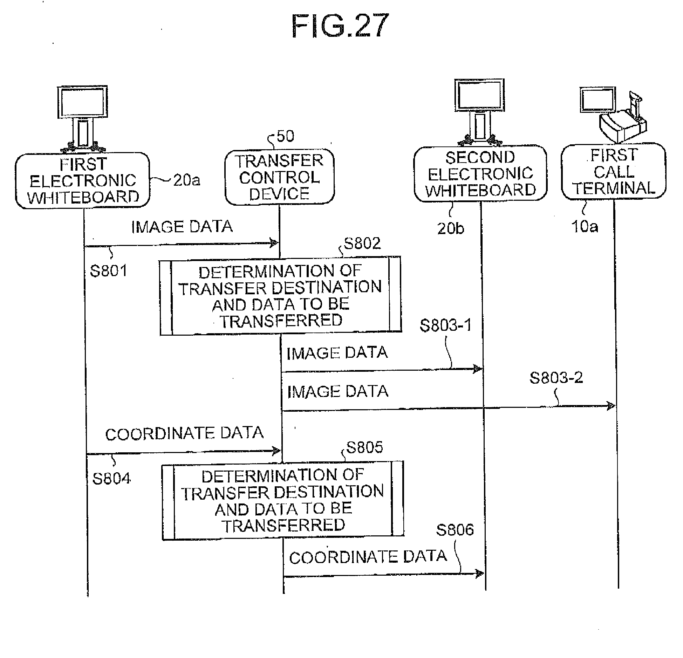

FIG. 27 is a diagram illustrating a sequence of when the content data is transferred from the first electronic whiteboard 20a to the second electronic whiteboard 20b and the first call terminal 10a.

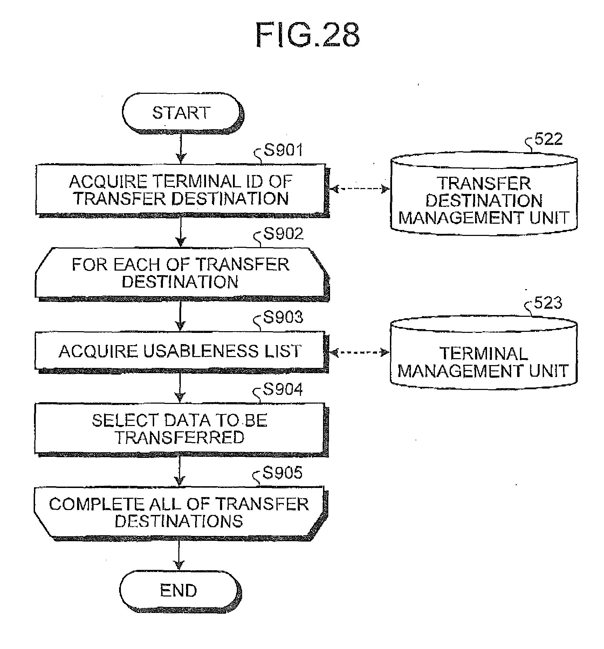

First, at step S801, the first electronic whiteboard 20a transmits the image data to the transfer control device 50. Then, at step S802, the transfer control device 50 executes processing of determining the transfer destination and data to be transferred, for transferring the image data received from the first electronic whiteboard 20a. The processing of determining the transfer destination and data to be transferred will be described later with reference to FIG. 28.

Here, the transfer control device 50 selects the second electronic whiteboard 20b and the first call terminal 10a, as the transfer destinations. Further, the transfer control device 50 selects the image data, as the data to be transferred to the second electronic whiteboard 20b. Further, the transfer control device 50 selects the image data, as the data to be transferred to the first call terminal 10a.

Then, at step S803-1, the transfer control device 50 transmits the image data received at step S801 to the second electronic whiteboard 20b. Further, at step S803-2, the transfer control device 50 transmits the image data received at step S801 to the first call terminal 10a. Accordingly, the second electronic whiteboard 20b and the first call terminal 10a can receive and display the image data transmitted from the first electronic whiteboard 20a.

Then, at step S804, the first electronic whiteboard 20a transmits the coordinate data to the transfer control device 50. Then, at step S805, the transfer control device 50 executes processing of determining the transfer destination and the data to be transferred (the flow of FIG. 28), for transferring the coordinate data received from the first electronic whiteboard 20a.

Here, the transfer control device 50 selects the second electronic whiteboard 20b and the first call terminal 10a, as the transfer destinations. Further, the transfer control device 50 selects the coordinate data, as the data to be transferred to the second electronic whiteboard 20b. Further, the transfer control device 50 does not select any data, as the data to be transferred to the first call terminal 10a, because the first call terminal 10a cannot use the coordinate data.

Then, at step S806, the transfer control device 50 transmits the coordinate data received at step S804 to the second electronic whiteboard 20b. However, the transfer control device 50 does not transmit the coordinate data to the first call terminal 10a. Accordingly, the second electronic whiteboard 20b can perform drawing according to the coordinate data.

With the above processing, according to the communication system 1, when the first electronic whiteboard 20a transmits a plurality of types of content data to the transfer control device 50 once, respective necessary types of content data are transferred to the second electronic whiteboard 20b and the first call terminal 10a. Therefore, according to the communication system 1, the transmission processing of the first electronic whiteboard 20a can be simplified. Further, according to the communication system 1, usable content data is transmitted to the second electronic whiteboard 20b and the first call terminal 10a, and unusable content data is not transmitted. Therefore, according to the communication system 1, the reception processing of the second electronic whiteboard 20b and the first call terminal 10a can be simplified.

### Processing of Determining Transfer Destination and Data to be Transferred

FIG. 28 is a diagram illustrating a flow of processing of determining the transfer destination and the data to be transferred in the transfer control device 50. When determining the transfer destination and the data to be transferred, the transfer control device 50 executes processing of steps S901 to 5905 below.

First, at step S901, when having received the content data from the terminal device 2 (first terminal device 2-1), the transfer destination selection unit 54 of the transfer control device 50 refers to the transfer destination list managed in association with the first terminal device 2-1 that has transmitted the content data, in the transfer destination management table stored in the transfer destination management unit 522. Then, the transfer destination selection unit 54 selects the terminal device 2 indicated in the referred transfer destination list, as at least one terminal device 2 (second terminal device 2-2) that serves as the transfer destination of the content data received from the first terminal device 2-1. Note that, in this case, the transfer destination selection unit 54 may select the terminal device 2 with the operation state of the operation state table stored in the operation state management unit 524 online, from among the terminal devices 2 indicated in the referred transfer destination list, as the transfer destination.

Then, the transfer destination selection unit 54 of the transfer control device 50 executes loop processing of steps S902 to S905, for each of the at least one second terminal device 2-2 selected at step S901.

At step S903 in the loop, the data selection unit 55 of the transfer control device 50 acquires the usableness list managed in association with the second terminal device 2-2 to be processed, in the terminal management table stored in the terminal management unit 523.

Then, at step S904 in the loop, the data selection unit 55 selects a usable type of the content data from among at least one type of the content data received from the first terminal device 2-1, for the second terminal device 2-2 to be processed, by reference to the acquired usableness list. That is, the data selection unit 55 selects a type of the content data listed in the usableness list, from among the at least one type of the content data received from the first terminal device 2-1.

Then, at step S905, the transfer destination selection unit 54 leaves the present flow when having completed the processing of steps S903 and S904, for all of the second terminal devices 2-2 selected at step S901. The transfer control device 50 can determine the transfer destination of the received content data, and the data to be transferred by executing the processing from steps S901 to S905.

### Processing at Connection/Removal of Display 120

FIG. 29 is a diagram illustrating a sequence of when the display 120 of the second call terminal 10b has been connected/removed when the content data is transferred from the first call terminal 10a to the second call terminal 10b. Assume that, in an initial state, the display 120 is not connected to the second call terminal 10b, and the usable content data is the sound data.

First, at step S1001, the first call terminal 10a transmits the image data and the sound data to the transfer control device 50. Then, at step S1002, the transfer control device 50 executes the processing of determining the transfer destination and the data to be transferred (the flow of FIG. 28). Here, the transfer control device 50 selects the second call terminal 10b, as the transfer destination, and selects the sound data, as the data to be transferred.

Then, at step S1003, the transfer control device 50 transmits the sound data received at step S1001 to the second call terminal 10b. Accordingly, the second call terminal 10b can receive and output the sound data transmitted from the first call terminal 10a.

Following that, at step S1004, the display 120 is connected to the second call terminal 10b by the user. Accordingly, thereafter, the usable content data of the second call terminal 10b becomes the sound data and the image data.

Then, at step S1005, the second call terminal 10b transmits the change notification that indicates that the sound data and the image data are usable, to the transfer control device 50, upon the connection of the display 120.

Then, at step S1006, when having received the change notification from the second call terminal 10b, the transfer control device 50 adds the image data to the usableness list managed in association with the second call terminal 10b, in the terminal management table stored in the terminal management unit 523. Note that, at step S1006, the transfer control device 50 may update the usableness list, and notify the first call terminal 10a that the image data becomes usable by the second call terminal 10b, Accordingly, the user of the first call terminal 10a can be notified that the user of the second call terminal 10b can see the image data.

Then, at step S1007, the first call terminal 10a transmits the image data and the sound data to the transfer control device 50. Then, at step S1008, the transfer control device 50 executes the processing of determining the transfer destination and the data to be transferred (the flow of FIG. 28). Here, the transfer control device 50 selects the second call terminal 10b, as the transfer destination, and selects the sound data and the image data, as the data to be transferred.

Then, at step S1009, the transfer control device 50 transmits the sound data and the image data received at step S1007 to the second call terminal 10b. Accordingly, the second call terminal 10b can receive and output the sound data and the image data transmitted from the first call terminal 10a.

Following that, at step S1010, the display 120 is removed from the second call terminal 10b by the user. Accordingly, thereafter, the usable content data by the second call terminal 10b becomes only the sound data.

Then, at step S1011, the second call terminal 10b transmits the change notification that indicates the sound data is usable, upon the removal of the display 120. Then, at step S1012, when having received the change notification from the second call terminal 10b, the transfer control device 50 deletes the image data from the usableness list managed in association with the second call terminal 10b, in the terminal management table stored in the terminal management unit 523. Note that, at step S1012, the transfer control device 50 may notify the first call terminal 10a that the second call terminal 10b cannot use the image data.

Then, at step S1013, the first call terminal 10a transmits the image data and the sound data to the transfer control device 50. Then, at step S1014, the transfer control device 50 executes the processing of determining the transfer destination and the data to be transferred (the flow of FIG. 28). Here, the transfer control device 50 selects the second call terminal 10b, as the transfer destination, and selects the sound data, as the data to be transferred. Then, at step S1015, the transfer control device 50 transmits the sound data received at step S1013, to the second call terminal 10b. Accordingly, the second call terminal 10b can receive and output the sound data transmitted from the first call terminal 10a.

According to the communication system 1, even if the content data usable by the second call terminal 10b is changed, necessary types of content data can be transferred to the second call terminal 10b. Therefore, according to the communication system 1, the transfer mount of data between the transfer control device 50 and the second call terminal 10b is decreased, and the amount of processing of the second call terminal 10b can be decreased.

Note that FIG. 29 illustrates the example in which the transmission-side first terminal device 2-1 is the first call terminal 10a, and the reception-side second terminal device 2-2 is the second call terminal 10b. However, the first terminal device 2-1 and the second terminal device 2-2 are not limited to these devices.

Further, the second terminal device 2-2 may transmit the change notification to the transfer control device 50 not only when the display 120 has been connected/removed, but also when another image output device such as a projector, or another device has been connected/removed. That is, the second terminal device 2-2 transmits the change notification to the transfer control device 50 when the usable content data has been changed by the change of the hardware configuration. The connection/removal of a device includes not only connection/removal of a cable, but also ON/OFF of a function of a device in a state where the cable is connected.

Further, the second terminal device 2-2 may transmit the change notification to the transfer control device 50 when the operation mode has been changed. For example, the second terminal device 2-2 may transmit the change notification when a mode to output only voice has been switched to a mode to output both of an image and voice, or when the mode to output both of an image and voice has been switched to the mode to output only voice.

Further, the second terminal device 2-2 may transmit the change notification to the transfer control device 50 when the power source of the connected device has been turned ON or OFF. For example, the second terminal device 2-2 may transmit the change notification when the power source of the connected display 120 has been switched from OFF to ON, or when the connected display 120 has been switched from ON to OFF.

### Processing at Connection/Removal of Microphone Speaker 220

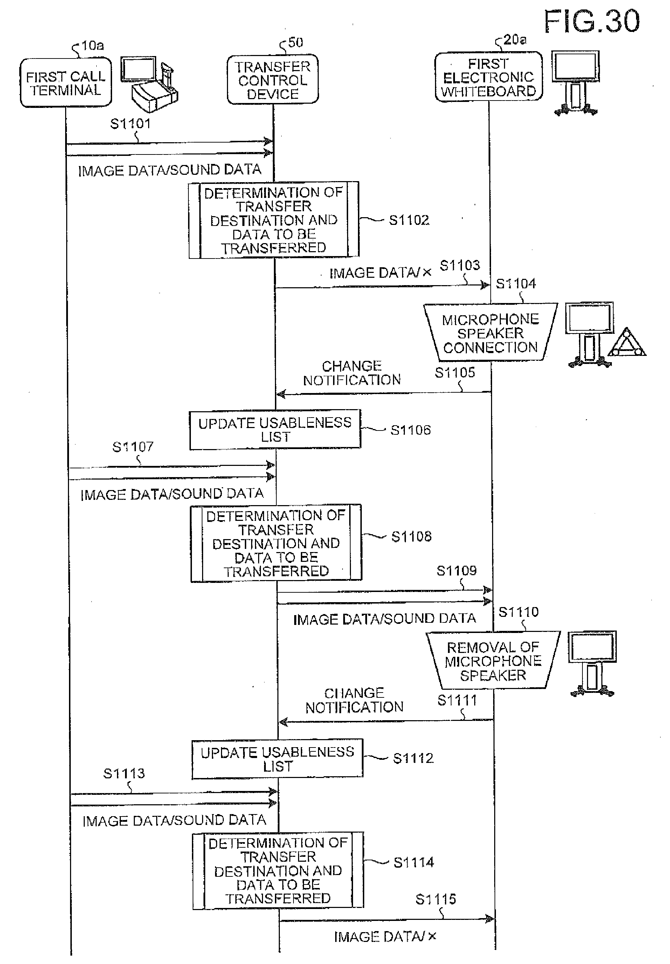

FIG. 30 is a diagram illustrating a sequence of when the microphone speaker 220 of the first electronic whiteboard 20a has been connected/removed, when the content data is transferred from the first call terminal 10a to the first electronic whiteboard 20a. In an initial state, the microphone speaker 220 is not connected to the first electronic whiteboard 20a, and the usable content data is the image data.

First, at step S1101, the first call terminal 10a transmits the image data and the sound data to the transfer control device 50. Then, at step S1102, the transfer control device 50 executes the processing of determining the transfer destination and the data to be transferred (the flow of FIG. 28). Here, the transfer control device 50 selects the first electronic whiteboard 20a, as the transfer destination, and selects the image data, as the data to be transferred.

Then, at step S1103, the transfer control device 50 transmits the image data received at step S1101 to the first electronic whiteboard 20a. Accordingly, the first electronic whiteboard 20a can receive and output the image data transmitted from the first call terminal 10a,

Following that, at step S1104, the microphone speaker 220 is connected to the first electronic whiteboard 20a by the user. Accordingly, thereafter, the usable content data of the first electronic whiteboard 20a becomes the image data and the sound data.

Then, at step S1105, the first electronic whiteboard 20a transmits the change notification that indicates that the image data and the sound data are usable, to the transfer control device 50, upon the connection of the microphone speaker 220, Then, at step S1106, when having received the change notification from the first electronic whiteboard 20a, the transfer control device 50 adds the sound data to the corresponding usableness list.

Then, at step S1107, the first call terminal 10a transmits the image data and the sound data to the transfer control device 50. Then, at step S1108, the transfer control device 50 executes the processing of determining the transfer destination and the data to be transferred (the flow of FIG. 28). Here, the transfer control device 50 selects the first electronic whiteboard 20a, as the transfer destination, and selects the image data and the sound data, as the data to be transferred.

Then, at step S1109, the transfer control device 50 transmits the image data and the sound data received at step S1107 to the first electronic whiteboard 20a. Accordingly, the first electronic whiteboard 20a can receive and output the image data and the sound data transmitted from the first call terminal 10a.

Following that, at step S1110, the microphone speaker 220 is removed from the first electronic whiteboard 20a by the user. Then, at step S1111, the first electronic whiteboard 20a transmits the change notification that indicates that the image data is usable, upon the removal of the microphone speaker 220. Then, at step S1112, when having received the change notification from the first electronic whiteboard 20a, the transfer control device 50 deletes the sound data from the corresponding usableness list.

Then, at step S1113, the first call terminal 10a transmits the image data and the sound data to the transfer control device 50. Then, at step S1114, the transfer control device 50 executes the processing of determining the transfer destination and the data to be transferred (the flow of FIG. 28). Here, the transfer control device 50 selects the first electronic whiteboard 20a, as the transfer destination, and selects the image data, as the data to be transferred. Then, at step S1115, the transfer control device 50 transmits the image data received at step S1113 to the first electronic whiteboard 20a.

According to the communication system 1, even if the usable content data of the first electronic whiteboard 20a is changed, necessary types of content data can be transferred to the first electronic whiteboard 20a. Therefore, according to the communication system 1, the transfer amount of data between the transfer control device 50 and the first electronic whiteboard 20a can be decreased, and the amount of processing of the first electronic whiteboard 20a can be decreased.

Note that FIG. 30 illustrates the example in which the transmission-side first terminal device 2-1 is the first call terminal 10a, and the reception-side second terminal device 2-2 is the first electronic whiteboard 20a. However, the first terminal device 2-1 and the second terminal device 2-2 are not limited to these devices. Further, the second terminal device 2-2 may transmit the change notification to the transfer control device 50 not only when the microphone speaker 220 has been connected/removed, but also when an audio output device such as a speaker has been connected/removed.

### Processing at Switching of Use Form

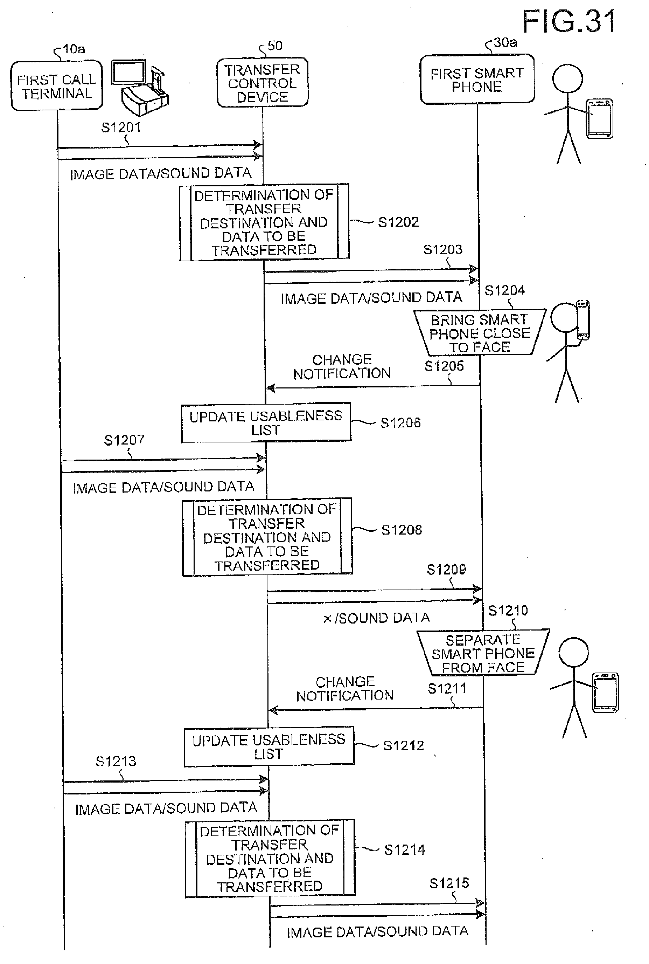

FIG. 31 is a diagram illustrating a sequence of when the use form of the first smart phone 30a has been switched, when the content data is transferred from the first call terminal 10a to the first smart phone 30a.

First, as the use form of the first smart phone 30a by the user, there are a form in which the phone is used close to the face, and a form in which the phone is used away from the face. The form in which the phone is used close to the face is a form in which the first smart phone 30a is used as a telephone device. That is, the use form is a form in which the user brings his/her ear close to the speaker 311, and uses the first smart phone 30a without seeing the touch panel display 313. In such a use form, the first smart phone 30a turns display of the touch panel display 313 OFF.

Meanwhile, the form in which the phone is used away from the face is a form in which the first smart phone 30a is used as an information processing device. That is, the use form is a form in which the user uses the first smart phone 30a while seeing the touch panel display 313. In the use form, the first smart phone 30a turns the display of the touch panel display 313 ON. Note that the change detection unit 165 of the first smart phone 30a can determine whether the face is close to the main body at a fixed distance or less, based on the distance value detected by the proximity sensor 316, for example.

At an initial state, the first smart phone 30a is in the form in which the phone is used away from the face, and the usable content data is the image data and the sound data.

First, at step S1201, the first call terminal 10a transmits the image data and the sound data to the transfer control device 50. Then, at step S1202, the transfer control device 50 executes the processing of determining the transfer destination and the data to be transferred (the flow of FIG. 28). Here, the transfer control device 50 selects the first smart phone 30a, as the transfer destination, and selects the image data and the sound data, as the data to be transferred.

Then, at step S1203, the transfer control device 50 transmits the image data and the sound data received at step S1201 to the first smart phone 30a. Accordingly, the first smart phone 30a can receive and output the image data and the sound data transmitted from the first call terminal 10a.

Following that, at step S1204, the first smart phone 30a is switched to the form in which the phone is used close to the face. Accordingly, thereafter, in the first smart phone 30a, the display of the touch panel display 313 is turned OFF, and the usable content data becomes only the sound data.

Then, at step S1205, the first smart phone 30a transmits the change notification that indicates that the sound data is usable, to the transfer control device 50, upon the switching to the form in which the phone is used close to the face. Then, at step S1206, when having received the change notification from the first smart phone 30a, the transfer control device 50 deletes the image data from the usableness list managed in association with the first smart phone 30a, in the terminal management database stored in the terminal management unit 523.

Then, at step S1207, the first call terminal 10a transmits the image data and the sound data to the transfer control device 50. Then, at step S1208, the transfer control device 50 executes the processing of determining the transfer destination and the data to be transferred (the flow of FIG. 28). Here, the transfer control device 50 selects the first smart phone 30a, as the transfer destination, and selects the sound data, as the data to be transferred. Then, at step S1209, the transfer control device 50 transmits the sound data received at step S1207 to the first smart phone 30a.

Following that, at step S1210, the first smart phone 30a is switched to the form in which the phone is used away from the face. Accordingly, thereafter, the usable content data of the first smart phone 30a becomes the image data and the sound data.

Then, at step S1211, the first smart phone 30a transmits the change notification that indicates that the image data and the sound data are usable, upon the switching to the form in which the phone is used away from the face. Then, at step S1212, when having received the change notification from the first smart phone 30a, the transfer control device 50 adds the image data to the corresponding usableness list.

Then, at step S1213, the first call terminal 10a transmits the image data and the sound data to the transfer control device 50. Then, at step S1214, the transfer control device 50 executes the processing of determining the transfer destination and the data to be transferred (the flow of FIG. 28). Here, the transfer control device 50 selects the first smart phone 30a, as the transfer destination, and selects the image data and the sound data, as the data to be transferred. Then, at step S1215, the transfer control device 50 transmits the image data and the sound data received at step S1213 to the first smart phone 30a.

According to the communication system 1, even if the use form of the first smart phone 30a is changed, a type of content data suitable for the use form can be transferred. Therefore, according to the communication system 1, the transfer amount of data between the transfer control device 50 and the first smart phone 30a is decreased, and the load of the processing of the first smart phone 30a can be decreased.

Note that the first smart phone 30a may transmit the change notification when a form in which the phone is used with the touch panel display 313 held downward has been switched to a form in which the phone is used with the touch panel display 313 held upward, or when the form in which the phone is used with the touch panel display 313 held upward has been switched to the form in which the phone is used with the touch panel display 313 held downward. In the form in which the phone is used with the touch panel display 313 held downward, the user uses the first smart phone 30a without seeing the touch panel display 313. Therefore, when the form in which the phone is used with the touch panel display 313 held downward has been switched to the form in which the phone is used with the touch panel display 313 held upward, the first smart phone 30a transmits the change notification that indicates that the sound data and the image data are usable. On the other hand, when the form in which the phone is used with the touch panel display 313 held upward has been switched to the form in which the phone is used with the touch panel display 313 held downward, the first smart phone 30a transmits the change notification that indicates that the sound data is usable. The change detection unit 165 of the first smart phone 30a can determine whether the touch panel display 313 faces downward or upward, based on the distance value detected by the gyro sensor 318, for example.

Further, the first smart phone 30a may transmit the change notification when an operation to stop reproduction of a picture displayed on the touch panel display 313 has been performed, or when an operation to start reproduction of a picture displayed on the touch panel display 313 has been performed. When the operation to stop reproduction of a picture has been performed, the first smart phone 30a transmits the change notification that indicates that only the sound data is usable. On the other hand, when the operation to start reproduction of a picture has been performed, the first smart phone 30a transmits the change notification that indicates that the image data and the sound data are usable.

Further, the first smart phone 30a may transmit the change notification when an operation to stop an output of a sound has been performed, or when an operation to start an output of a sound has been performed. When the operation to stop an output of a sound has been performed, the first smart phone 30a transmits the change notification that indicates that only the image data is usable. On the other hand, when the operation to start an output of a sound has been performed, the first smart phone 30a transmits the change notification that indicates that the image data and the sound data are usable.

### Processing at Switching of Quality

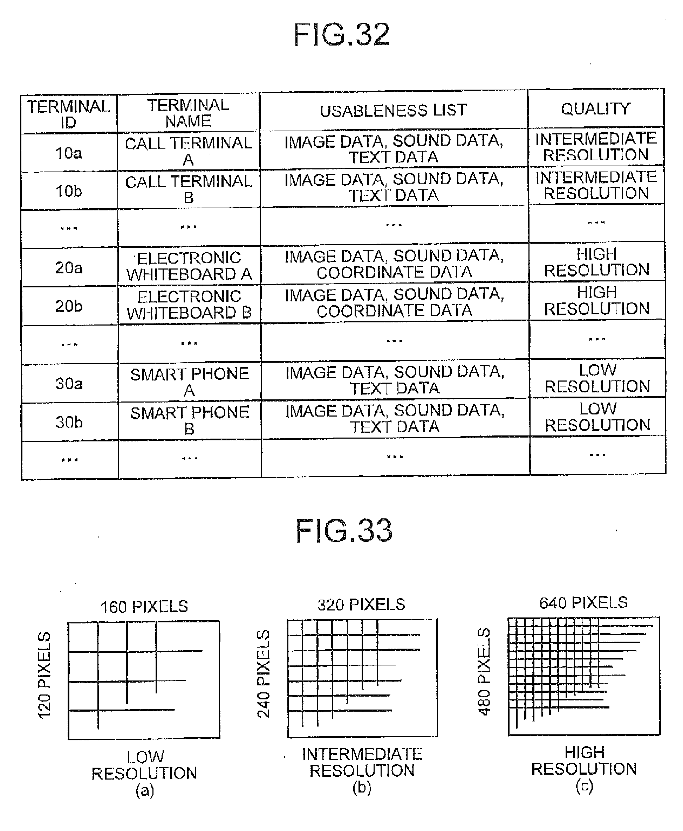

FIG. 32 is a diagram illustrating a modification of a terminal management table. FIG. 33 illustrates an example of an image with a low resolution at (a), an example of an image with an intermediate resolution at (b), and an example of an image with a high resolution at (c).

The terminal management unit 523 of the transfer control device 50 may store the terminal management table as illustrated in FIG. 32. The terminal management table of FIG. 32 further store image quality of processable content data.

As an example, the image quality of the processable content data is a resolution of the content data. For example, when a screen size of the terminal device 2 is 160 x 120 pixels in the horizontal x vertical directions, as illustrated at (a) in FIG. 33, the image quality becomes the low resolution. When the screen size of the terminal device 2 is 320 x 240 pixels, as illustrated at (b) in FIG. 33, the image quality becomes the intermediate resolution. Further, when the screen size of the terminal device 2 is 640 x 480 pixels, as illustrated at (c) in FIG. 33, the image quality becomes the high resolution.

Then, when the transfer control device 50 receives the image data from the first terminal device 2-1, and transfers the image data to the second terminal device 2-2, the transfer control device 50 converts the image data into the image quality managed in association with the second terminal device 2-2, in the terminal management table stored in the terminal management unit 523. As an example, the transfer control device 50 converts the image data received from the first terminal device 2-1 into the resolution corresponding to the screen size of the second terminal device 2-2, and transmits the image data to the second terminal device 2-2.

Therefore, according to the communication system 1, the first terminal device 2-1 can transmit the image data regardless of the quality of the content data processable by the second terminal device 2-2. Therefore, according to the communication system 1, the transmission processing of the first terminal device 2-1 can be simplified. Further, according to the communication system 1, the second terminal device 2-2 receives the content data with processable quality, and thus the processing of the second terminal device 2-2 can be simplified.

Further, the second terminal device 2-2 transmits quality change information that notifies that the quality has been changed, to the transfer control device 50, when the quality of the content data processable by the second terminal device 2-2 has been switched due to device replacement or the like. Then, when having received the quality change information, the transfer control device 50 updates the quality of the processable content data managed in association with the second terminal device 2-2, in the terminal management table stored in the terminal management unit 523. Therefore, according to the communication system 1, even if the quality of the content data processable by the second terminal device 2-2 is changed, content data with appropriate quality can be transferred.

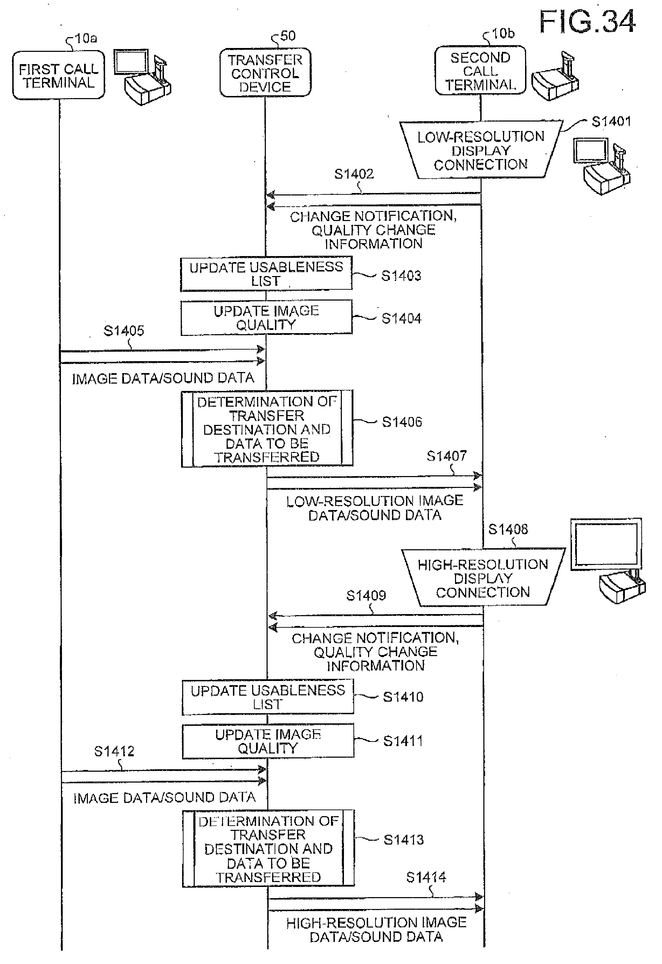

FIG. 34 is a diagram illustrating a sequence of when the screen size of the display 120 of the second call terminal 10b has been changed, when the content data is transferred from the first call terminal 10a to the second call terminal 10b. At an initial state, the display 120 is not connected to the second call terminal 10b, and the usable content data is the sound data.

First, at step S1401, the display 120 with the low resolution is connected to the second call terminal 10b. Accordingly, thereafter, the usable content data of the second call terminal 10b becomes the sound data and the image data, and the quality of the processable image data becomes the low resolution.

Then, at step S1402, the second call terminal 10b transmits the change notification that indicates that the usable content data is the sound data and the image data, and the quality change information that indicates that the quality of the processable image data is the low resolution, to the transfer control device 50, upon the connection of the display 120 with the low resolution.

Then, at step S1403, when having received the change notification from the second call terminal 10b, the transfer control device 50 adds the image data to the usableness list associated with the second call terminal 10b, in the terminal management table stored in the terminal management unit 523. Then, at step S1404, when having received the quality change information from the second call terminal 10b, the transfer control device 50 causes the image quality associated with the second call terminal 10b, in the terminal management table stored in the terminal management unit 523, to be the low resolution.

Then, at step S1405, the first call terminal 10a transmits the image data and the sound data to the transfer control device 50, Then, at step S1406, the transfer control device 50 executes the processing of determining the transfer destination and the data to be transferred (the flow of FIG. 28). In this case, the transfer control device 50 selects the second call terminal 10b, as the transfer destination, selects the sound data and the image data, as the data to be transferred, and selects the low resolution, as the quality of the image data.

Then, at step S1407, the transfer control device 50 transmits the sound data received at step S1405, and the image data caused to be the low resolution, to the second call terminal 10b. Accordingly, the second call terminal 10b can receive and output the sound data and the image data transmitted from the first call terminal 10a.

Following that, at step S1408, the display 120 with the high resolution is connected to the second call terminal 10b by the user. Accordingly, thereafter, the usable content data of the second call terminal 10b becomes the sound data and the image data, and the quality of the processable image data becomes the high resolution.

Then, at step S1409, the second call terminal 10b transmits the change notification that indicates the usable content data is the sound data and the image data, and the quality change information that indicates that the quality of the processable image data is the high resolution, to the transfer control device 50, upon the connection of the display 120 with the high resolution.

Following that, at step S1410, when having received the change notification from the second call terminal 10b, the transfer control device 50 maintains the usableness list of the second call terminal 10b as it is (the sound data and the image data), in the terminal management unit 523. Following that, at step S1411, when having received the quality change information from the second call terminal 10b, the transfer control device 50 changes the image quality of the second call terminal 10b, in the terminal management unit 523, to the high resolution.

Then, at step S1412, the first call terminal 10a transmits the image data and the sound data to the transfer control device 50. Then, at step S1413, the transfer control device 50 executes the processing of determining the transfer destination and the data to be transferred (the flow of FIG. 28). In this case, the transfer control device 50 selects the second call terminal 10b, as the transfer destination, selects the sound data and the image data, as the data to be transferred, and selects the high resolution, as the quality of the image data.

Then, at step S1414, the transfer control device 50 transmits the sound data received at step S1412, and the image data caused to be the high resolution, to the second call terminal 10b. Accordingly, the second call terminal 10b can receive and output the sound data and the image data transmitted from the first call terminal 10a.

According to the communication system 1, even if the quality of the content data processable by the second call terminal 10b is changed, the content data with appropriate quality can be transferred to the second call terminal 10b. Therefore, according to the communication system 1, the transfer amount of data between the transfer control device 50 and the second call terminal 10b is decreased, and the amount of processing of the second call terminal 10b can be decreased.

Note that FIG. 34 illustrates the example in which the transmission-side first terminal device 2-1 is the first call terminal 10a, and the reception-side second terminal device 2-2 is the second call terminal 10b. However, the first terminal device 2-1 and the second terminal device 2-2 are not limited to these devices.

Further, in the example of FIG, 34, the terminal device 2 that receives the image data is the second call terminal 10b. However, the communication system 1 may transfer the image data to the call terminal 10 to which the display 120 with the low resolution is connected, and to the call terminal 10 to which the display 120 with the high resolution is connected. In this case, the transfer control device 50 transmits the image data with the low resolution to the terminal device 2 to which the display 120 with the low resolution is connected, and transmits the image data with the high resolution to the terminal device 2 to which the display 120 with the high resolution is connected.

Further, the quality of the content data processable by the terminal device 2 may be another quality other than the image size. For example, the quality of the content data processable by the terminal device 2 may be a rate of the image data receivable by the terminal device 2. Further, the quality of the content data processable by the terminal device 2 may be a compression ratio of the image data decodable by the terminal device 2. Further, the quality of the content data processable by the terminal device 2 may be a communication band of the image data receivable by the terminal device 2.

Further, the quality of the content data processable by the terminal device 2 is not only the quality of the image data, but also quality of another data. For example, the quality of the content data processable by the terminal device 2 may be a rate, a compression ratio, or a communication band of audio data.

### Supplement of Embodiment

Note that the transfer control device 50 and the program providing device 60 of the above-described embodiment may be built with a single computer, or may be built with a plurality of computers to which divided units (functions or means) are arbitrarily allocated. Further, when the program providing device 60 is built with a single computer, the program transmitted by the program providing device 60 may be transmitted by being divided into a plurality of modules, or may be transmitted without division. Further, when the program providing device 60 is built with a plurality of computers, a plurality of modules may be transmitted from the computers, in a state of being divided.

Further, the communication system 1 can be applied to any system as long as the terminal devices 2 can communicate with one another in the system. For example, the communication system 1 can be applied to a television (video) conference system, a sound conference system, a sound telephone system (including a mobile phone system), a text chat system, a whiteboard sharing system, or the like.

Further, the terminal device 2 may be a personal computer, a notebook computer, a dedicated device for games, a telephone device, a dedicated device of a communication system, a tablet-type information terminal, a printer, a scanner, a multifunction peripheral including a printer, a scanner, and the like, a projector, a robot and wearable computer terminal, an industrial device having a communication function, or the like, in addition to or in place of the call terminal 10, the electronic whiteboard 20, and the smart phone 30. Further, the wearable computer terminal includes a device having a communication function (a wrist watch, a pair of glasses, a head up display, an earphone, a cap, a glove, shoes, and a bag), and the like.

Further, the above-described programs may be distributed by being recorded on a recording medium readable by a computer, such as a CD-ROM, with a file in an installable format or an executable format.

Further, in the embodiment, an example in which the authentication management unit 521, the transfer destination management unit 522, the terminal management unit 523, and the operation state management unit 524 are stored in the storage unit 51 has been described. However, the embodiment is not limited to the example. For example, at least a part of the authentication management unit 521, the transfer destination management unit 522, the terminal management unit 523, and the operation state management unit 524 may be built in a storage unit of another device that is a separate body from the transfer control device 50, or may be built in the other server or the like connected through the network 3. In this case, the transfer control device 50 accesses the other server (computer) to store and read out various types of information.

Further, in the above embodiment, the terminal ID has been used as an example of the identification information. However, the identification information is not limited to the example, and a user ID for identifying the user may be used as another identification information.

According to an embodiment, content data to be transferred from a first terminal device to a second terminal device can be appropriately selected according to change of a type of content data usable in the second terminal device.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or nonvolatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. A communication system comprising:
a first terminal device that generates at least one type of content data;
a second terminal device that can use at least one type of content data; and
a transfer control device, wherein
the transfer control device includes
a terminal management unit that stores a type of content data usable by the second terminal device,
a reception unit that receives the at least one type of content data generated by the first terminal device,
a data selection unit that selects, for the second terminal device, the usable type of content data from among the at least one type of content data received from the first terminal device, by reference to the terminal management unit,
a transmission unit that transmits the type of content data selected by the data selection unit to the second terminal device, and
an update unit that updates corresponding information stored in the terminal management unit, according to change notification of a usable type of content data, the change notification being transmitted from the second terminal device.

2. The communication system according to claim 1, wherein
the second terminal device includes a plurality of second terminal devices,
the transfer control device further includes
a transfer destination management unit that stores identification information of at least one of the second terminal devices that serves as transfer destination of the content data received from the first terminal device, and
a transfer destination selection unit that selects the at least one of the second terminal devices serving as the transfer destination of the content data received from the first terminal device, by reference to the transfer destination management unit,
the terminal management unit stores a type of content data usable by each of the second terminal devices,
the data selection unit selects a usable type of content data, from among the at least one type of content data received from the first terminal device, for each of the at least one of the second terminal devices selected by the transfer destination selection unit, by reference to the terminal management unit, and
the transmission unit transmits a corresponding type of content data selected by the data selection unit to each of the at least one of the second terminal devices selected by the transfer destination selection unit.

3. The communication system according to claim 1 or 2, wherein
the second terminal device includes a change detection unit that detects change of the type of content data usable by the second terminal device, and transmits the change notification to the transfer control device when the change detection unit has detected the change of the usable type of content data.

4. The communication system according to claim 3, wherein
the change detection unit transmits the change notification to the transfer control device when a hardware configuration has been changed.

5. The communication system according to claim 3, wherein
the change detection unit transmits the change notification to the transfer control device when an image output device has been connected or removed.

6. The communication system according to claim 3, wherein
the change detection unit transmits the change notification to the transfer control device when an audio output device has been connected or removed.

7. The communication system according to claim 3, wherein
the change detection unit transmits the change notification to the transfer control device when an operation mode of the second terminal device has been changed.

8. The communication system according to claim 7, wherein
the change detection unit transmits the change notification to the transfer control device when a power source of a connected device has been turned ON or OFF.

9. The communication system according to claim 3, wherein
the change detection unit transmits the change notification to the transfer control device when a use form of the second terminal device has been changed.

10. The communication system according to claim 9, wherein
in a case where the second terminal device is a mobile terminal device with a telephone function, the change detection unit transmits the change notification to the transfer control device when the use form has been switched between a form in which the mobile terminal device is used close to a face and a form in which the mobile terminal device is used away from the face.

11. The communication system according to claim 3, wherein
the change detection unit transmits the change notification and quality change information to the transfer control device when quality of processable content data has been changed.

12. The communication system according to claim 11, wherein
the change detection unit transmits the quality change information to the transfer control device when a communication band of processable content data has been changed.

13. A transfer control device that transfers content data received from a first terminal device to a second terminal device, the transfer control device comprising:
a terminal management unit that stores a type of content data usable by the second terminal device,
a reception unit that receives at least one type of content data generated by the first terminal device,
a data selection unit that selects, for the second terminal device, the usable type of content data from among the at least one type of content data received from the first terminal device, by reference to the terminal management unit,
a transmission unit that transmits the type of content data selected by the data selection unit to the second terminal device, and
an update unit that updates corresponding information stored in the terminal management unit, according to change notification of a usable type of content data, the change notification being transmitted from the second terminal device.

14. A communication method of transferring content data received from a first terminal device to a second terminal device, the method comprising:
storing a type of content data usable by the second terminal device, in a terminal management unit;
receiving at least one type of content data generated by the first terminal device;
selecting, for the second terminal device, the usable type of content data from among the at least one type of content data received from the first terminal device, by reference to the terminal management unit;
transmitting the type of content data selected at the selecting, to the second terminal device; and
updating corresponding information stored in the terminal management unit, according to change notification of a usable type of content data, the change notification being transmitted from the second terminal device.

15. A computer program product comprising a non-transitory computer-readable medium containing an information processing program, the program causing a computer to function as a transfer control device that transfers content data received from a first terminal device to a second terminal device, the transfer control device including:
a terminal management unit that stores a type of content data usable by the second terminal device,
a reception unit that receives at least one type of content data generated by the first terminal device,
a data selection unit that selects, for the second terminal device, the usable type of content data from among the at least one type of content data received from the first terminal device, by reference to the terminal management unit,
a transmission unit that transmits the type of content data selected by the data selection unit to the second terminal device, and
an update unit that updates corresponding information stored in the terminal management unit, according to change notification of a usable type of content data, the change notification being transmitted from the second terminal device.
